# EUROPEAN PATENT SPECIFICATION

(11) **EP 0 536 687 B1**
(45) Date of publication and mention of the grant of the patent: **14.04.1999**
(21) Application number: 92117020.5
(22) Date of filing: 06.10.1992
(51) Int. Cl.: H04L 27/22

(54) **Method and apparatus for demodulation with adaptive phase control in quasicoherent detection**
Verfahren und Einrichtung zur Demodulation mit adaptiver Phasenreglung bei pseudo-kohärenter Detektion
Procédé et dispositif de démodulation avec contrôle adaptif de phase, pour détection pseudo-cohérente

(30) Priority: 07.10.1991 JP 259167/91
(43) Date of publication of application: 14.04.1993
(73) Proprietor: NIPPON TELEGRAPH AND TELEPHONE CORPORATION, Shinjuku-ku, Tokyo 163-19 (JP)
(72) Inventor: Denno, Satoshi, Yokosuka-shi, Kanagawa-ken (JP); Saito, Yoichi, Yokohama-shi, Kanagawa-ken (JP)
(74) Representative: Lehn, Werner, Dipl.-Ing.

(56) References cited:
- EP-A- 0 355 587
- ELECTRONICS AND COMMUNICATIONS IN JAPAN vol. 67-B, no. 5, 1984, NEW YORK US J. NAMIKI: 'Block Demodulation for Short Radio Packet.'
- ELECTRONICS & COMMUNICATIONS IN JAPAN, PART I - COMMUNICATIONS vol. 74, no. 2, February 1991, NEW YORK US pages 28 - 35 M. MATSUI ET AL.: 'New Block Demodulator with an Automatic Equalizer.'
- ELECTRONICS & COMMUNICATIONS IN JAPAN, PART I - COMMUNICATIONS vol. 72, no. 7, 1989, NEW YORK US Y. HIGASHIDA ET AL.: 'Timing Extraction and Carrier Estimation for PSK Signal Block Demodulation System.'
- IEEE TRANSACTIONS ON INFORMATION THEORY vol. 29, no. 4, July 1983, NEW YORK US pages 543 - 551 A. J. VITERBI / A. M. VITERBI: 'Nonlinear Estimation of PSK-Modulated Carrier Phase with Application to Burst Digital Transmission.'
- 1988 IEEE International Symposium on Circuits and Systems ISCAS '88, 07.-09.06.1988, Espoo, FI, vol. 2, pages 1815-1818, IEEE, New York, US; P. EGLIN et al.: 'Digital Implementation of a Coherent CPM System for Mobile Radio.'

## Description

### BACKGROUND OF THE INVENTION

### Field of the Invention

The present invention relates to a quasi-coherent detection in which a quadrature detection of modulated input signals at a local oscillator frequency is made, and a phase compensation is made on baseband signals converted from the detected input signals.

### Description of the Background Art

Conventionally, a quasi-coherent detection, in which the quadrature detection of the modulated input signals at a local oscillator frequency is made and the phase compensation is made on the baseband signals converted from the detected input signals, has been developed in the field of low speed data transmission. However, in recent years, due to the increasing speed of the digital circuits, there are cases in which the quasi-coherent detection is utilized for the high speed data transmission.

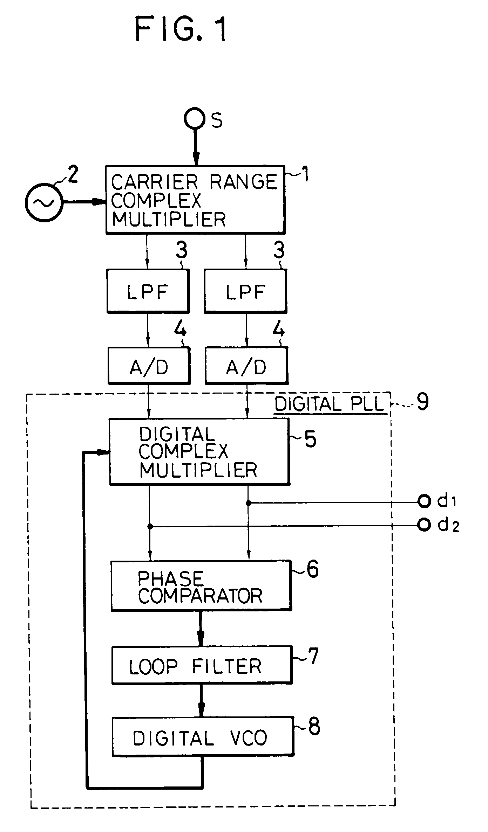

An example of a conventional quasi-coherent detection circuit for the high speed data transmission is disclosed in Ohtani et al. "Development of Digital MODEM LSI for Satellite Communications", Electronic Information Communication Society, Satellite Communication Study Session SAT88-7, pp.39-45, which has a configuration shown in Fig. 1. This configuration of Fig. 1 is basically a conventionally known carrier recovery circuit configuration implemented in terms of baseband range digital signals. In Fig. 1, a signal line for a complex quantity is indicated by a thick line, while a signal line for a scalar quantity is indicated by a thin line.

More specifically, in this circuit of Fig. 1, a carrier range complex multiplier 1 makes the quadrature detection of the modulated input signals S at a local frequency of a local oscillator 2, and after the noise components are removed by low pass filters 3, the detected input signals are converted into digital signals at A/D converters 4 and entered into a digital PLL (Phase Lock Loop) circuit 9.

At the digital PLL circuit 9, the phase rotation due to the frequency error is corrected at a digital complex multiplier 5. Then, the phase error is detected at a phase comparator 6, and the error voltage is integrated at a loop filter 7, so as to provide the feedback from a digital VCO (Voltage Controlled Oscillator) 8 to the digital complex multiplier 5.

Thus, in this quasi-coherent detection circuit, the acquisition time is determined by the time constant and the loop gain of the loop filter 7 which are the loop parameters of the digital PLL circuit 9.

In this configuration of Fig. 1, even though the high speed acquisition characteristic can be achieved by enhancing the noise band width, the quality of the demodulated signals can be deteriorated by such an enhancement of the noise band width.

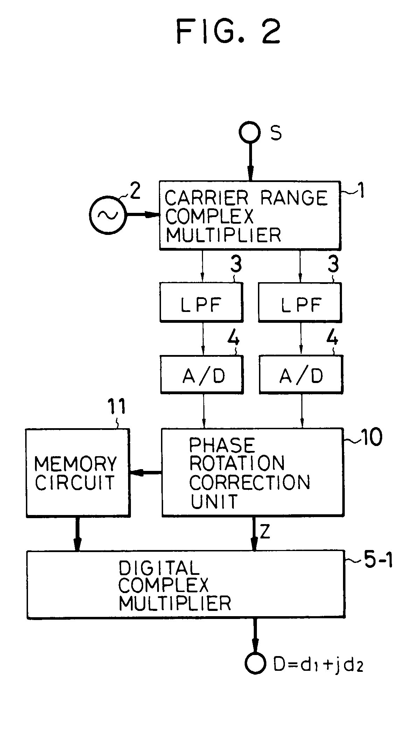

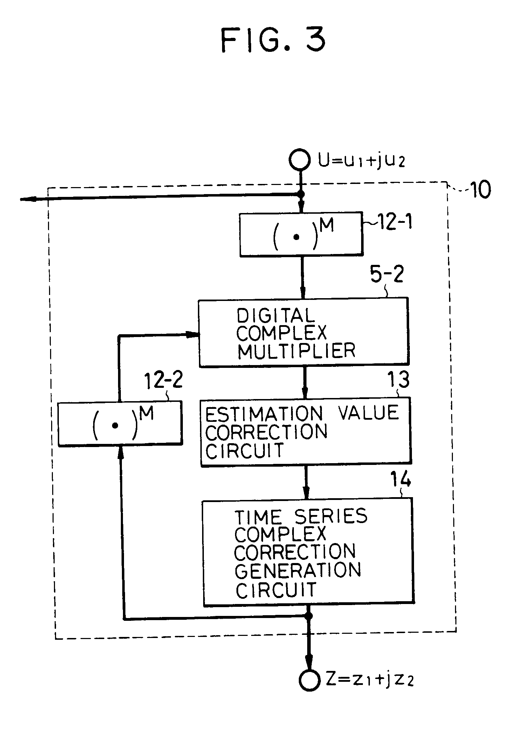

Another example of a conventional quasi-coherent detection for the high speed data transmission is a block demodulation for the burst signals disclosed in Namiki, "Block Demodulation for Short Radio Packet", Electronic Information Communication Society Proceedings, "84/1, Vol.J67-B, No.1, pp.54-61, which can be implemented by a circuit configuration shown in Figs. 2 and 3.

More specifically, in this circuit shown in Fig. 2, the quasi-coherent detection of modulated input signals S having N symbols for forming one burst is made by the carrier range complex multiplier 1, the local oscillator 2, the low pass filters 3, and the A/D converters 4, which are similar to those appeared in the circuit of Fig. 1 described above.

Then, the carrier recovery is achieved by the averaging process using the power multiplication operations and the least square algorithm, where the total error including the initial phase error and the frequency error is estimated by using the least square algorithm, and the phase rotation is corrected according to the result of this estimation at a phase rotation correction estimation unit 10 shown in detail in Fig. 3.

Namely, in the phase rotation correction estimation unit 10 shown in Fig. 3, when the modulated input signals S are the M-array phase shift keying modulation signals, the tentatively demodulated signals U obtained at the A/D converters 4 are temporarily stored in a memory unit 11 shown in Fig. 2. Meawhile, the modulation components are removed by multiplying the tentatively demodulated signals U for M times at an M-th power multiplication circuit 12-1. Then, the phase rotation is corrected at a digital complex multiplier 5-2 by calculating a complex multiplication of the beat components obtained by the M-th power multiplication circuit 12-1 and the correction signals for up to the immediately previous symbol multiplied for M times by another M-th power multiplication circuit 12-2. Then, the least square estimation value for the immediately previous symbol is corrected by the newly obtained estimation value at an estimation value correction circuit 13. Then, the estimation value for the n-th symbol is converted at a time series complex correction generation circuit 14 into the complex signals Z = exp[-j{θ_{0̸}+δω(n-1)T}] with the initial phase difference equal to θ_{0̸} and the frequency error equal to δω(n-1)T, where δω is the frequency error and T is a symbol period.

Next, the tentatively demodulated signals U including the beat components which are stored in a memory circuit 11 are multiplied with the complex signals Z obtained by the phase rotation correction estimation unit 10 sequentially at a digital complex multiplier 5-1 to obtain the final demodulated signals.

However, this block demodulation requires a memory circuit with a memory capacity equal to the length of the burst, as well as many complex multipliers and adders, so that the circuit size inevitably becomes quite large.

In addition, a delay of at least one burst length is required in obtaining the final demodulated signals, so that it is not applicable to an application requiring the real time operation.

Another example of a conventional quasi-coherent detection for the high speed data transmission is a method for estimating the phase of the carrier by using the linear estimation, disclosed in Sanpei, "QPSL Coherent Detection Method for Land Mobile Radio Communications Using Linear Mean Square Estimation", Electronic Information Communication Society B-II, Vol.J 72-B-II, No.4, pp.125-132.

However, even though this method can make the configuration of the circuit simpler, the steady state phase error occurs in a case involving a frequency error, so that the proper demodulation cannot be achieved in a case involving the frequency error in this method.

### SUMMARY OF THE INVENTION

It is therefore an object of the present invention to provide a method and an apparatus for demodulation in quasi-coherent detection, capable of estimating and correcting the time variation of the detection phase error due to the initial phase error and the frequency error, at high speed, such that the proper demodulated signals can be obtained at high quality, without a complicated circuit configuration and a significant delay.

According to one aspect of the present invention there is provided a method of demodulation with adaptive phase control, for obtaining demodulated complex signals from modulated complex input signals, comprising the steps of: estimating a frequency error in the modulated complex input signals by using a phase variation during one symbol due to the frequency error according to the modulated complex input signals and the demodulated complex signals for present and immediately previous symbols; estimating an initial phase error in the modulated complex input signals, according to said modulated complex input signals, said demodulated complex signals and the estimated frequency error; and applying optimum phase compensation based on the estimated frequency error and the estimated initial phase error to said modulated complex input signals in order to obtain said demodulated complex signals.

According to another aspect of the present invention there is provided an apparatus for demodulation with adaptive phase control, for obtaining demodulated complex signals from modulated complex input signals, comprising: means for estimating a frequency error in the modulated complex input signals by using a phase variation during one symbol due to the frequency error according to the modulated complex input signals and the demodulated complex signals for present and immediately previous symbols; means for estimating an initial phase error in the modulated complex input signals, according to said modulated complex input signals, said demodulated complex signals, and the estimated frequency error; and means for applying optimum phase compensation based on the estimated frequency error and the estimated initial phase error to said modulated complex input signals in order to obtain said demodulated complex signals.

Other features and advantages of the present invention will become apparent from the following description taken in conjunction with the accompanying drawings.

### BRIEF DESCRIPTION OF THE DRAWINGS

Fig. 1 is a block diagram of a first example of a conventional quasi-coherent detection circuit for the high speed transmission.

Fig. 2 is a block diagram of a second example of a conventional quasi-coherent detection circuit for the high speed transmission.

Fig. 3 is a detailed block diagram of a phase rotation correction estimation unit in the conventional quasi-coherent detection circuit shown in Fig. 2.

Fig. 4 is a block diagram of a first embodiment of an apparatus for demodulation with adaptive phase control in quasi-coherent detection, according to the present invention.

Fig. 5 is a detailed block diagram of a phase control circuit in the apparatus of Fig. 4.

Fig. 6 is a detailed block diagram of a correlation value weighted accumulation circuit in the phase control circuit of Fig. 5.

Fig. 7 is a detailed block diagram of an exponentially weighted accumulation circuit in the correlation value weighted accumulation circuit of Fig. 6.

Fig. 8 is a detailed block diagram of a complex normalization circuit in the correlation value weighted accumulation circuit of Fig. 6.

Fig. 9 is a detailed block diagram of an auto correlation value weighted accumulation circuit in the phase control circuit of Fig. 5.

FIg. 10 is a detailed block diagram of an exponentially weighted accumulation circuit in the auto correlation value weighted accumulation circuit of Fig. 9.

Fig. 11 is a detailed block diagram of an involution circuit in the phase control circuit of Fig. 5.

Fig. 12 is a detailed block diagram of a cross correlation value weighted accumulation circuit in the phase control circuit of Fig. 5.

Fig. 13 is a detailed block diagram of a phase control circuit in a second embodiment of an apparatus for demodulation with adaptive phase control in quasi-coherent detection, according to the present invention.

Fig. 14 is a detailed block diagram of a frequency error detection circuit in the phase control circuit of Fig. 13.

Fig. 15 is a detailed block diagram of a phase error detection circuit in the phase control circuit of Fig. 13.

Fig. 16 is a detailed block diagram of a phase control circuit in a third embodiment of an apparatus for demodulation with adaptive phase control in quasi-coherent detection, according to the present invention.

Fig. 17 is a detailed block diagram of a correlation value weighted accumulation circuit in the phase control circuit of Fig. 16.

Fig. 18 is a detailed block diagram of a cross correlation value weighted accumulation circuit in the phase control circuit of Fig. 16.

Fig. 19 is a detailed block diagram of a frequency compensation circuit in a phase control circuit, in a fourth embodiment of an apparatus for demodulation with adaptive phase control in quasi-coherent detection, according to the present invention.

Fig. 20 is a detailed block diagram of a frequency compensation circuit in a phase control circuit, in a fifth embodiment of an apparatus for demodulation with adaptive phase control in quasi-coherent detection, according to the present invention.

### DETAILED DESCRIPTION OF THE PREFERRED EMBODIMENTS

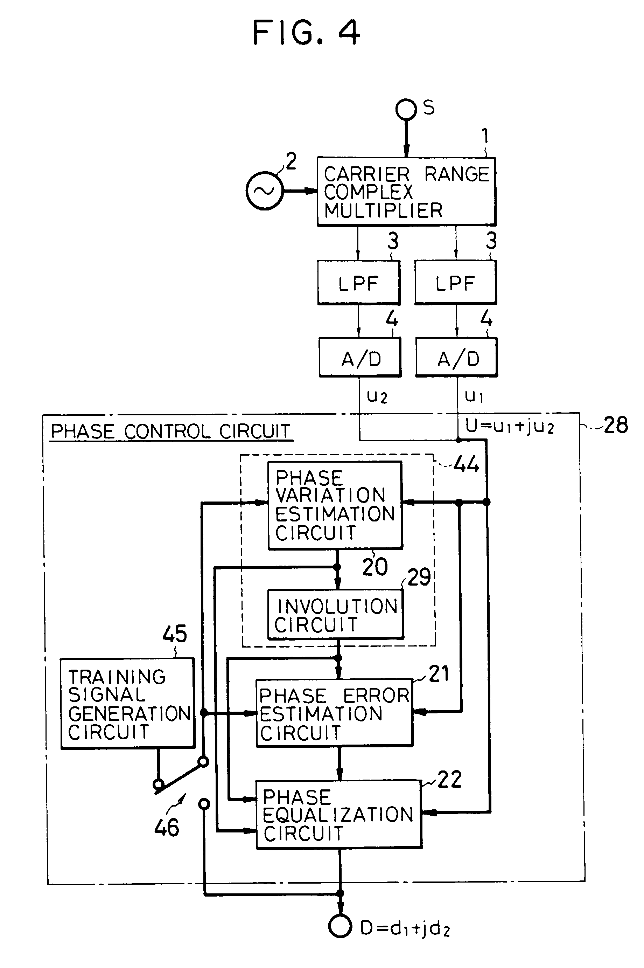

Referring now to Fig. 4, a first embodiment of an apparatus for demodulation with adaptive phase control in quasi-coherent detection according to the present invention will be described in detail. In the following, a signal line for a complex quantity is indicated by a thick line, while a signal line for a scalar quantity is indicated by a thin line.

In this apparatus of Fig. 4, modulated input signals S having a central frequency equal to f_{0̸} are to be demodulated to obtain demodulated complex signals D = d₁ + jd₂, where j² = -1 and d₁ denotes in-phase signals while d2 denotes quadrature signals.

This apparatus of Fig. 4 includes: a carrier range complex multiplier 1, a local oscillator 2, low pass filters 3, and A/D converters 4, which are similar to those used in the conventional quasi-coherent detection apparatus described above.

Thus, the carrier range complex multiplier 1 makes the quadrature detection of the modulated input signals S at a local frequency f_{0̸}+Δf of the local oscillator 2, and the noise and higher harmonic components are removed at low pass filters 3, and then the detected input signals are converted into digital signals u₁ and u₂ at A/D converters 4, where the digital signals u₁ and u₂ form tentatively demodulated signals U = u₁ + ju₂ which u₁ as in-phase components and u₂ as quadrature components.

The tentatively demodulated signals U in a form of a series of sampled values generated at symbol periods are then supplied to a phase control circuit 28 in which all the processings are carried out digitally.

The phase control circuit 28 comprises: a phase error estimation circuit 21, a phase equalization circuit 22, a frequency compensation circuit 44, a training signal generation circuit 45, and a switching circuit 46, which realizes a Wiener filter as a whole.

The frequency compensation circuit 44 further comprises: a phase variation estimation circuit 20 and an involution circuit 29, and functions to make an estimation for phase compensation required by a frequency error in the tentatively demodulated signals U.

The phase variation estimation circuit 20 estimates the phase variation due to the frequency error by using RLS (Recursive Least Square) algorithm in the tentatively demodulated signals U entered from the A/D converters 4, and outputs the obtained phase variation estimation to the involution circuit 29.

The phase error estimation circuit 21 estimates the initial phase error due to the frequency error by using RLS (Recursive Least Square) algorithm in the tentatively demodulated signals U entered from the A/D converters 4, according to the output of the involution circuit 29.

The phase equalization circuit 22 makes the phase equalization in the tentatively demodulated signals U entered from the A/D converters 4, according to the outputs of the phase variation estimation circuit 20, the involution circuit 29, and the phase error estimation circuit 21, to obtain the demodulated complex signals D.

The training signal generation circuit 45 generates the training signals to be used in the phase variation estimation circuit 20 and the phase error estimation circuit 21, and the switching circuit 46 selectively supplies either the training signals generated by the training signal generation circuit 45 or the demodulated complex signals D outputted by the phase equalization circuit 22 to the phase variation estimation circuit 20 and the phase error estimation circuit 21. When the frequency error in the tentatively demodulated signals U is large, the switching circuit 46 initially selects the training signals from the training signal generation circuit 45, and then subsequently switches to the demodulated complex signals D from the phase equalization circuit 22 later on. These training signal generation circuit 45 and the switching circuit 46 may be omitted if desired.

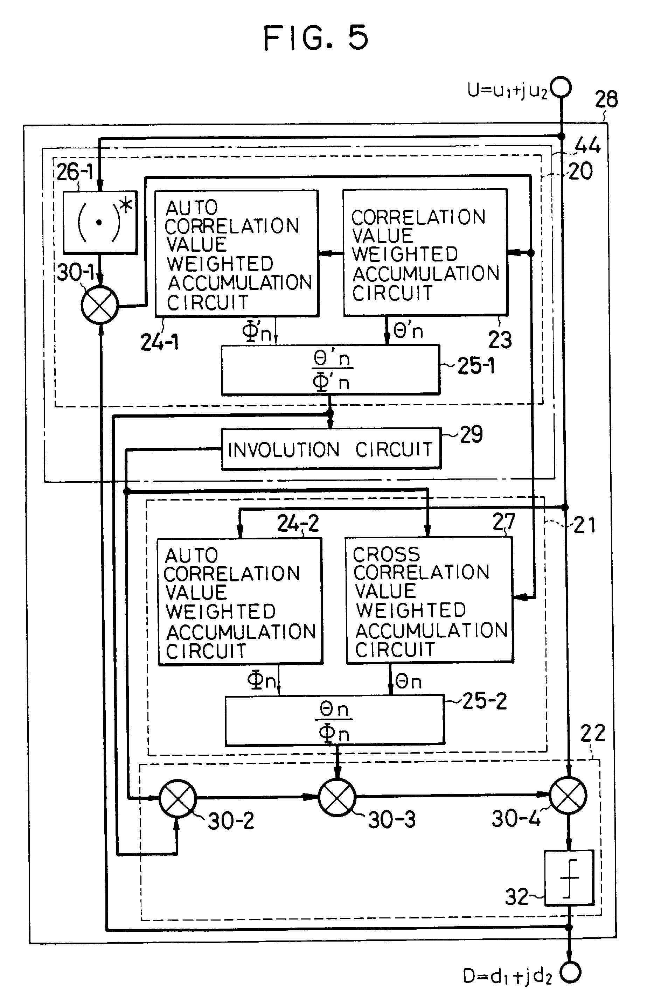

In further detail, for a case of using the RLS algorithm for 16 QAM (Quadrature Amplitude Modulation) and not using the training signals, the phase control circuit 28 has a configuration as shown in Fig. 5.

In this configuration of Fig. 5, the phase variation estimation circuit 20 in the frequency compensation circuit 44 further comprises: a complex conjugation circuit 26-1 for taking a complex conjugation of the tentatively demodulated signals U; a complex multiplier 30-1 for calculating a cross correlation value of the complex conjugate of the tentatively demodulated signals U obtained at the complex conjugation circuit 26-1 and the demodulated complex signals D outputted from the phase equalization circuit 22; a correlation value weighted accumulation circuit 23 to be described below; an auto correlation value weighted accumulation circuit 24-1 to be described below; and a divider 25-1 to be described below. Here, the cross correlation value is taken at the complex multiplier 30-1 in order to remove the modulation components and leave the beat components in the tentatively demodulated signals U.

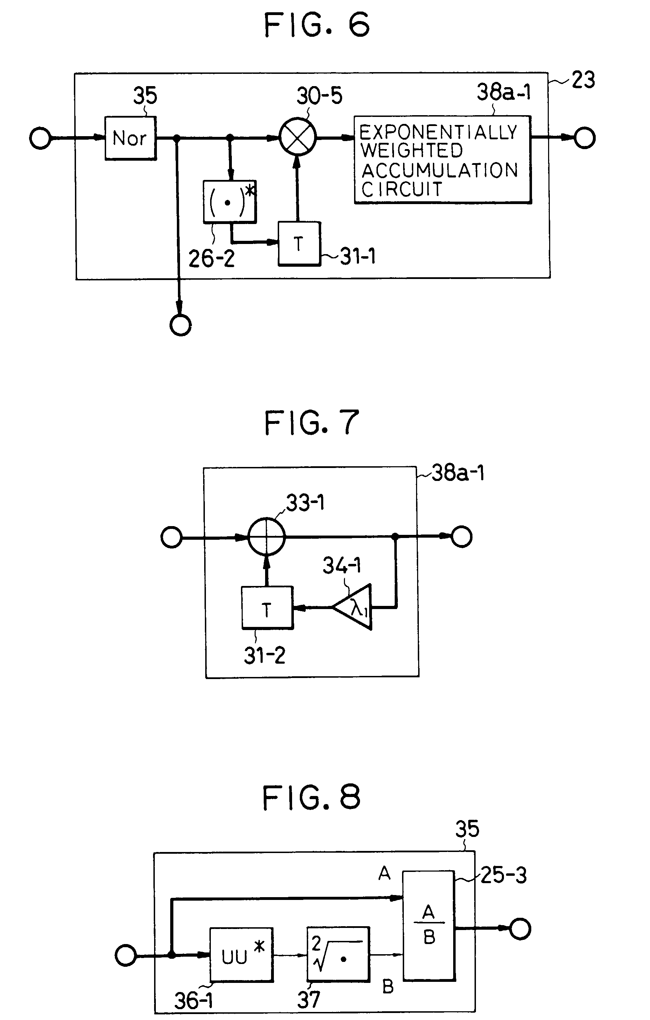

The correlation value weighted accumulation circuit 23 in the phase variation estimation circuit 20 functions to normalize the correlation value obtained by the complex multiplier 30-1, detect the variation during one symbol, and calculate the accumulation value of the detected variations weighted by a forgetting factor λ₁, and has a detail configuration as shown in Fig. 6.

In this configuration of Fig. 6, the correlation value weighted accumulation circuit 23 comprises: a complex normalization circuit 35 for normalizing the correlation value obtained by the complex multiplier 30-1; a complex conjugation circuit 26-2 for taking a complex conjugate of the normalized correlation value obtained by the complex normalization circuit 35; a delay circuit 31-1 for delaying the complex conjugate obtained by the complex conjugation circuit 26-2 for one symbol period; a complex multiplier 30-5 for multiplying the normalized correlation value obtained by the complex normalization circuit 35 and the delayed complex conjugate outputted from the delay circuit 31-1, so as to obtain the variation during one symbol; and an exponentially weighted accumulation circuit 38a-1 for calculating the exponentially weighted accumulation value Θ'ₙ of the variations obtained by the complex multiplier 30-5.

The normalized correlation value obtained by the complex normalization circuit 35 is also outputted to the auto correlation value weighted accumulation circuit 24-1, while the exponentially weighted accumulation value Θ'ₙ calculated by the exponentially weighted accumulation circuit 38a-1 is outputted to the divider 25-1.

The exponentially weighted accumulation circuit 38a-1 further comprises, as shown in Fig. 7, an adder 33-1, a weight circuit 34-1 for weighting an output of the adder 33-1 with the forgetting factor λ₁, and a delay circuit 31-2 for delaying the weighted output obtained by the weight circuit 34-1 for one symbol period and supplying it to the adder 33-1 such that the adder 33-1 adds the output of the complex multiplier 30-5 and the delayed output supplied from the delay circuit 31-2.

The complex normalization circuit 35 further comprises, as shown in Fig. 8, a complex square multiplication circuit 36-1 for calculating a complex square multiplication of the input denoted as A in Fig. 8, a square root circuit 37 for calculating a square root of the complex square multiplication calculated by the complex square multiplication circuit 36-1 which is denoted as B in Fig. 8, and a divider 25-3 for dividing the input A by the square root of the complex square multiplication B, so as to obtain the absolute value of the input A.

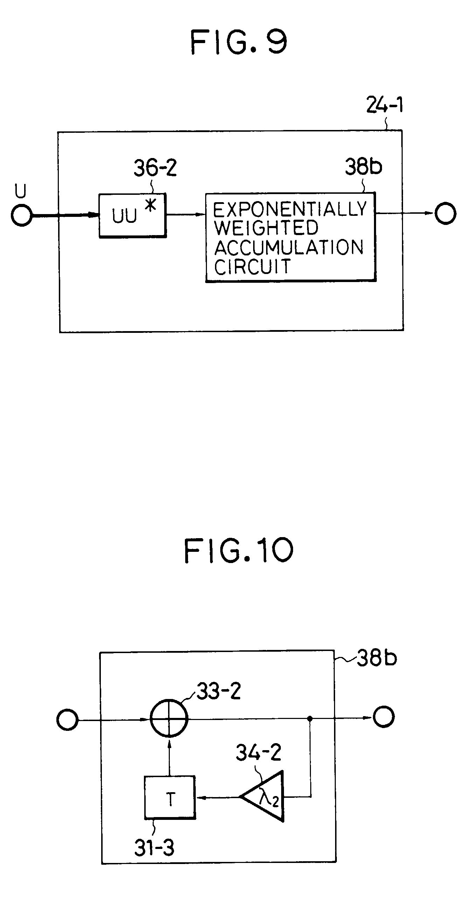

On the other hand, the auto correlation value weighted accumulation circuit 24-1 in the phase variation estimation circuit 20 functions to calculate the accumulation value of the normalized correlation value supplied from the complex normalization circuit 35 weighted by a forgetting factor λ₂ which may be equal to the forgetting factor λ₁, and has a detail configuration as shown in Fig. 9.

In this configuration of Fig. 9, the auto correlation value weighted accumulation circuit 24-1 comprises: a complex square multiplication circuit 36-2 for calculating a complex square multiplication of the normalized correlation value supplied from the complex normalization circuit 35; and an exponentially weighted accumulation circuit 38b for calculating the exponentially weighted accumulation value Φ'ₙ of the complex square multiplication obtained by the complex square multiplication circuit 36-2. The exponentially weighted accumulation value Φ'ₙ calculated by the exponentially weighted accumulation circuit 38b, which is a scalar quantity, is outputted to the divider 25-1.

The exponentially weighted accumulation circuit 38b further comprises, as shown in Fig. 10, an adder 33-2, a weight circuit 34-2 for weighting an output of the adder 33-2 with the forgetting factor λ₂, and a delay circuit 31-3 for delaying the weighted output obtained by the weight circuit 34-2 for one symbol period and supplying it to the adder 33-2 such that the adder 33-2 adds the output of the complex square multiplication circuit 36-2 and the delayed output supplied from the delay circuit 31-3.

Then, the divider 25-1 in the phase variation estimation circuit 20 divides the exponentially weighted accumulation value Θ'ₙ supplied from the correlation value weighted accumulation circuit 23 by the exponentially weighted accumulation value Φ'ₙ supplied from the auto correlation value weighted accumulation circuit 24-1. The output Θ'ₙ/Φ'ₙ obtained by the divider 25-1, which indicates the phase variation estimation, is then supplied to the involution circuit 29 as well as to the phase equalization circuit 22.

In this phase variation estimation circuit 20, the variation during one symbol obtained by the complex multiplier 30-5 in the correlation value weighted accumulation circuit 23 is proportional to the frequency error in the tentatively demodulated signals U for that one symbol, and the phase variation estimation obtained by the divide 25-1 indicates an ensemble average of the phase variations during one symbol in the tentatively demodulated signals U.

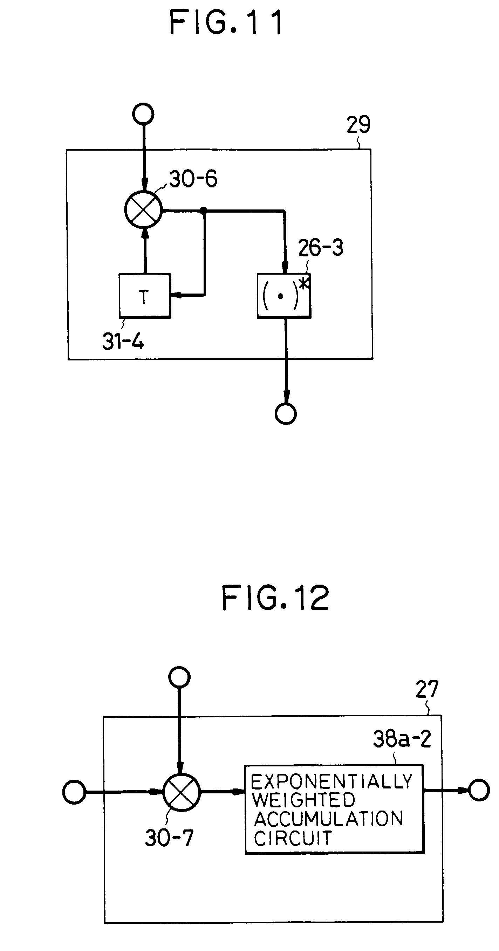

The involution circuit 29 in the frequency compensation circuit 44 calculates the involution of the output Θ'ₙ/Φ'ₙ outputted by the divider 25-1 to obtain the total phase variation for the n-th symbol, which is taken as the estimation of phase compensation required by a frequency error, and has a detail configuration as shown in Fig. 11.

In this configuration of Fig. 11, the involution circuit comprises: a complex multiplier 30-6, a delay circuit 31-4 for delaying an output of the complex multiplier 30-6 for one symbol period such that the complex multiplier 30-6 multiplies the output Θ'ₙ/Φ'ₙ supplied from the divider 25-1 by itself, and a complex conjugation circuit 26-3 for taking the complex conjugate of the output of the complex multiplier 30-6 so as to obtain the involution. The involution obtained by the involution circuit 29, which indicates the estimation of phase compensation required by a frequency error, is then supplied to the phase error estimation circuit 21 as well as to the phase equalization circuit 22.

Now, the frequency error estimated by the frequency compensation circuit 44 does not account for the initial phase error. In particular, in a case of mobile communication, the phase variation can be caused by the Rayleigh fading, even when the frequency error is equal to zero. For this reason, it is further necessary to make an estimation for the initial phase error, in order to be able to compensate the phase variation due to such an initial phase error. To this end, the phase during one burst in the burst signal transmission is assumed to be stationary even under the Rayleigh fading. In other words, the initial phase error is estimated as an ensemble average of the mean phase errors between the input and the output.

In the configuration of Fig. 5, this function is realized by the phase error estimation circuit 21, which further comprises: a cross correlation value weighted accumulation circuit 27, an auto correlation value weighted accumulation circuit 24-2, and a divider 25-2.

The cross correlation value weighted accumulation circuit 27 in the phase error estimation circuit 21 functions to calculate the cross correlation value of the correlation value obtained by the complex multiplier 30-1 and the involution obtained by the involution circuit 29, and then calculate the accumulation value of the cross correlation values weighted by the forgetting factor λ₁, and has a detail configuration as shown in Fig. 12.

In this configuration of Fig. 12, the cross correlation value weighted accumulation circuit 27 comprises: a complex multiplier 30-7 for multiplying the correlation value outputted from the complex multiplier 30-1 and the involution outputted from the involution circuit 29 so as to obtain the cross correlation value; and an exponentially weighted accumulation circuit 38a-2 for calculating the exponentially weighted accumulation value Θₙ of the cross correlation values obtained by the complex multiplier 30-7, which has a substantially similar configuration as that shown in Fig. 7 described above.

On the other hand, the auto correlation value weighted accumulation circuit 24-2 in the phase error estimation circuit 21 functions to calculate the accumulation value of the tentatively demodulated signals U entered into the phase control circuit 28 weighted by the forgetting factor λ₂, and has a detail configuration which is substantially similar to that shown in Fig. 9 described above.

The exponentially weighted accumulation value Φₙ calculated by the exponentially weighted accumulation circuit 38b in this auto correlation value weighted accumulation circuit 24-2, which is a scalar quantity, is outputted to the divider 25-2.

Then, the divider 25-2 in the phase error estimation circuit 21 divides the exponentially weighted accumulation value Θₙ supplied from the cross correlation value weighted accumulation circuit 27 by the exponentially weighted accumulation value Φₙ supplied from the auto correlation value weighted accumulation circuit 24-2. The output Θₙ/Φₙ obtained by the divider 25-2, which indicates the initial phase error estimation, is then supplied to the phase equalization circuit 22.

Finally, in the configuration of Fig. 5, the phase equalization circuit 22 further comprises: three complex multipliers 30-2, 30-3, and 30-4; and a decision circuit 32. In this phase equalization circuit 22, the phase equalization in the tentatively demodulated signals U entered into the phase control circuit 28 is made as follows. First, a complex multiplication of the phase variation estimation outputted from the phase variation estimation circuit 20, the estimation of phase compensation required by the frequency error outputted from the involution circuit 29,, and the initial phase error estimation outputted from the phase error estimation circuit 21, is calculated at the complex multipliers 30-2 and 30-3, so as to determine the optimum phase compensation for the tentatively demodulated signals U. Then, a complex multiplication of the tentatively demodulated signals U entered into the phase control circuit 28 and the determined optimum phase compensation is calculated at the complex multiplier 30-4 to make the optimum phase compensation on the tentatively demodulated signals U. Lastly, the decision of the digital signal values in the optimally phase compensated and tentatively demodulated signals U obtained at the complex multiplier 30-4 is made by the decision circuit 32 to obtain the demodulated complex signals D.

In summary. the operation in the phase control circuit 28 in this first embodiment proceeds as follows.

First, at the phase variation estimation circuit 20, the correlation value of the tentatively demodulated signals U and the demodulated complex signals D is calculated at the complex multiplier 30-1, and the phase variation during one symbol due to the frequency error is estimated. Then, according to this phase variation estimation, the phase compensation required by the frequency error is estimated at the involution circuit 29.

Next, at the phase error estimation circuit 21, the initial phase error is estimated according to the phase compensation estimated at the frequency compensation circuit 44.

Next, at the phase equalization circuit 22, a complex multiplication of the phase variation estimation obtained at the phase variation estimation circuit 20 and the estimation of phase compensation obtained at the involution circuit 29 is calculated at the complex multiplier 30-2 to obtain the estimated phase compensation due to the frequency error, and then a complex multiplication of this estimated phase compensation due to the frequency error and the initial phase error estimation obtained at the phase error estimation circuit 21 is calculated at the complex multiplier 30-3 to determine the optimum phase compensation. Then, the determined optimum phase compensation is made on the tentatively demodulated signals U at the complex multiplier 30-4, so that the demodulated complex signals D are obtained at the decision circuit 32 according to these optimally phase compensated and tentatively demodulated signals U obtained at the complex multiplier 30-4.

It is to be noted that this first embodiment of an apparatus for quasi-coherent detection with adaptive phase control is also applicable to a case of the multi-level modulation.

In addition, when this first embodiment is applied to a case of the PSK (Phase Shift Keying) modulation, because the input signal level at the Nyquist point is constant in such a case, the normalization for the input of the auto correlation value weighted accumulation circuit 24-1 can be omitted.

As described, in this first embodiment, the adaptive phase control is achieved at the phase control circuit 28 by estimating the frequency error according to the variation during one symbol in the cross correlation value of the input and the output of the phase control circuit 28, and then estimating the initial phase error according to the frequency error estimation, using a Wiener filter configuration in which the input is weighted by complex weights and a mean square value of a difference between the weighted input and a desired signal is made minimum, where the demodulated complex signals are used as the desired signal in the embodiment described above. The training signals generated by the training signal generation circuit 45 shown in Fig. 4 may be used as the desired signal instead.

Now, in general, in order to estimate the detection phase error by using a Wiener filter and to recursively obtain the desirable (in a sense that the mean square value of the error becomes minimum) demodulated signals by correcting the tentatively demodulated signals, it is possible to utilize the RLS (Recursive Least Square) algorithm which uses a complex multiplication of the input and a complex signal (least square estimation value) obtained as S1/S2, where S1 is a signal obtained by accumulating the cross correlation values of the input and the desired signal weighted by the forgetting factor, and S2 is a signal obtained by accumulating the auto correlation values of the input weighted by the same forgetting factor, as disclosed in Japanese Patent Application No. 3-160672.

Here, in order for this RLS algorithm to be applicable, it is necessary to have the stationariness established, i.e., the average value of the error signals must be equal to zero as in a case of the differential detection. However, in a case of the quasi-coherent detection, the stationariness cannot be established because of the presence of the time variation of the detected phase error, i.e., the frequency error between carriers, so that the steady state phase error remains after the correction deduced by the RLS algorithm.

In order to circumvent this difficulty, the estimation of the phase variation during one symbol in the cross correlation value is made at the phase variation estimation circuit 20, because the phase variation due to the frequency error is equal to the variation during one symbol in the cross correlation value of the input and the demodulated output. Then, the phase error due to the frequency error is obtained by calculating the involution of the estimated phase variation, and the initial phase error is estimated after the effect of the frequency error is removed from the input by multiplying the input with the phase error at the phase error estimation circuit 21. Finally, the estimation of phase compensation required by the frequency error for the next symbol is obtained by calculating a complex multiplication of the phase compensation required by the estimated frequency error and the current phase variation estimation, and the optimum phase compensation for the next symbol is obtained by calculating a complex multiplication of the estimation of phase compensation and the initial phase error estimation.

Thus, the method used in this first embodiment significantly differs from the conventionally known methods in that the steady state phase error due to the frequency off-set can be removed completely by carrying out the phase equalization with the phase variation due to the frequency error taken into account, where the frequency error is estimated from the variation in the cross correlation value of the input and the desired signals.

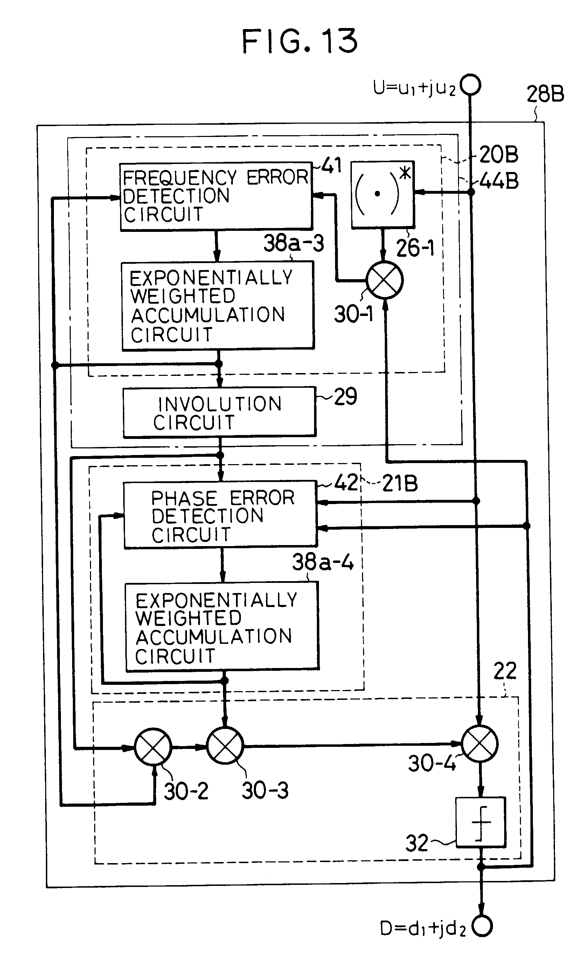

Referring now to Fig. 13, a second embodiment of an apparatus for demodulation with adaptive phase control in quasi-coherent detection according to the present invention will be described in detail. Here, those elements which are substantially equivalent to the corresponding elements in the first embodiment described above will be given the same reference numerals in the figures, and their description will be omitted.

This second embodiment is a modification of the first embodiment described above in which the LMS (Least Mean Square) algorithm is utilized in the phase control circuit instead of the RLS algorithm.

Although not shown in Fig. 13, in which second embodiment, modulated input signals S having a central frequency equal to f_{0̸} are to be demodulated to obtain demodulated complex signals D = d₁ + jd₂, where j² = -1 and d₁ denotes in-phase signals while d2 denotes quadrature signals.

Accordingly, the apparatus of this second embodiment also includes: a carrier range complex multiplier 1, a local oscillator 2, low pass filters 3, and A/D converters 4, which are similar to those appearing in the first embodiment shown in Fig. 4 described above.

In this second embodiment, the phase control circuit 28B comprises: a frequency compensation circuit 44B, a phase error estimation circuit 21B, a phase equalization circuit 22 similar to that used in the first embodiment, which also realizes a Wiener filter as a whole.

The frequency compensation circuit 44B further comprises: a phase variation estimation circuit 20B, and an involution circuit 29 similar to that used in the first embodiment, and functions to make an estimation of phase compensation required by a frequency error by using the LMS algorithm.

The phase variation estimation circuit 20B estimates the phase variation due to the frequency error by using LMS algorithm in the tentatively demodulated signals U entered into the phase control circuit 28B, and outputs the obtained phase variation estimation to the involution circuit 29.

The phase error estimation circuit 21B estimates the initial phase error due to the frequency error by using LMS algorithm in the tentatively demodulated signals U entered into the phase control circuit 28B according to the output of the involution circuit 29.

In further detail, the phase variation estimation circuit 20B in the frequency compensation circuit 44B further comprises: a complex conjugation circuit 26-1 and a complex multiplier 30-1 similar to those used in the first embodiment; a frequency error detection circuit 41; and an exponentially weighted accumulation circuit 38a-3 similar to that shown in Fig. 7 used in the first embodiment.

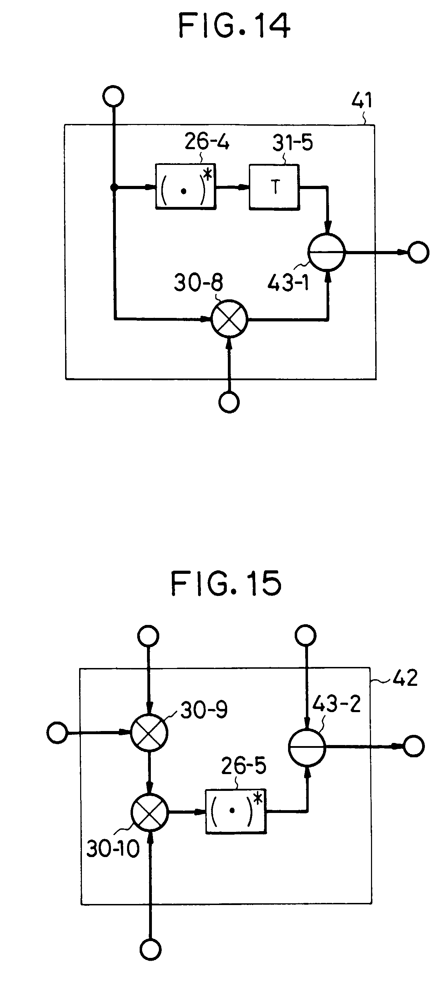

The frequency error detection circuit 41 in the phase variation estimation circuit 20B functions to detect the phase variation during one symbol, and has a detail configuration as shown in Fig. 14.

In this configuration of Fig. 14, the frequency error detection circuit 41 comprises: a complex conjugation circuit 26-4 for taking a complex conjugate of the cross correlation value obtained by the complex multiplier 30-1; a delay circuit 31-5 for delaying the complex conjugate obtained by the complex conjugation circuit 26-4 for one symbol period; a complex multiplier 30-8 for multiplying the cross correlation value obtained by the complex multiplier 30-1 and the output of the frequency error detection circuit 41; and a subtractor 43-1 for subtracting the output of the complex multiplier 30-8 from the delayed complex conjugate outputted from the delay circuit 31-5 so as to obtain the variation during one symbol.

Then, the exponentially weighted accumulation circuit 38a-3 calculates the exponentially weighted accumulation value of the variations obtained by the subtractor 43-1, which is subsequently outputted to the involution circuit 29 and the complex multiplier 30-2 in the phase equalization circuit 22, while also fed back to the complex multiplier 30-8 of the frequency error detection circuit 41.

The involution circuit 29 calculates the involution of the exponentially weighted accumulation value obtained by the exponentially weighted accumulation circuit 38a-3 to obtain the estimation of phase compensation required by a frequency error, which is subsequently supplied to the phase error estimation circuit 21B as well as to the complex multiplier 30-2 in the phase equalization circuit 22.

Also, in the configuration of Fig. 13, the phase error estimation circuit 21B further comprises: a phase error detection circuit 42, and an exponentially weighted accumulation circuit 38a-4 similar to that shown in Fig. 7 used in the first embodiment.

The phase error detection circuit 42 in the phase error estimation circuit 21B functions to detect the initial phase error according to the estimated frequency error, and has a detail configuration as shown in Fig. 15.

In this configuration of Fig. 15, the phase error detection circuit 42 comprises: a complex multiplier 30-9 for multiplying the tentatively demodulated signals U and the involution obtained by the involution circuit 29; a complex multiplier 30-10 for multiplying the output of the complex multiplier 30-9 and the output of the phase error detection circuit 42; a complex conjugation circuit 26-5 for taking the complex conjugate of the output of the complex multiplier 30-10; and a subtractor 43-2 for subtracting the complex conjugate obtained by the complex conjugation circuit 26-5 from the demodulated complex signals D outputted from the phase equalization circuit 22 to obtain the initial phase error.

Then, the exponentially weighted accumulation circuit 38a-4 calculates the exponentially weighted accumulation value of the initial phase error obtained by the subtractor 43-2, which is subsequently outputted to the complex multiplier 30-3 in the phase equalization circuit 22, while also fed back to the complex multiplier 30-10 of the phase error detection circuit 42.

In summary, the operation in the phase control circuit 28B in this second embodiment proceeds, just as in the first embodiment described above, as follows.

First, at the phase variation estimation circuit 20B, the correlation value of the tentatively demodulated signals U and the demodulated complex signals D is calculated at the complex multiplier 30-1, and the phase variation during one symbol due to the frequency error is estimated. Then, according to this phase variation estimation, the phase compensation required by the frequency error is estimated at the involution circuit 29.

Next, at the phase error estimation circuit 21B, the initial phase error is estimated according to the phase variation and the phase compensation estimated at the frequency compensation circuit 44B.

Next, at the phase equalization circuit 22, a complex multiplication of the phase variation estimation obtained at the phase variation estimation circuit 20B and the estimation of phase compensation obtained at the involution circuit 29 is calculated at the complex multiplier 30-2 to obtain the estimated phase compensation due to the frequency error, and then a complex multiplication of this estimated phase compensation and the initial phase error estimation obtained at the phase error estimation circuit 21B is calculated at the complex multiplier 30-3 to determine the optimum phase compensation. Then, the determined optimum phase compensation is made on the tentatively demodulated signals U at the complex multiplier 30-4, and the demodulated complex signals D are obtained at the decision circuit 32 according to these optimally phase compensated and tentatively demodulated signals U obtained at the complex multiplier 30-4.

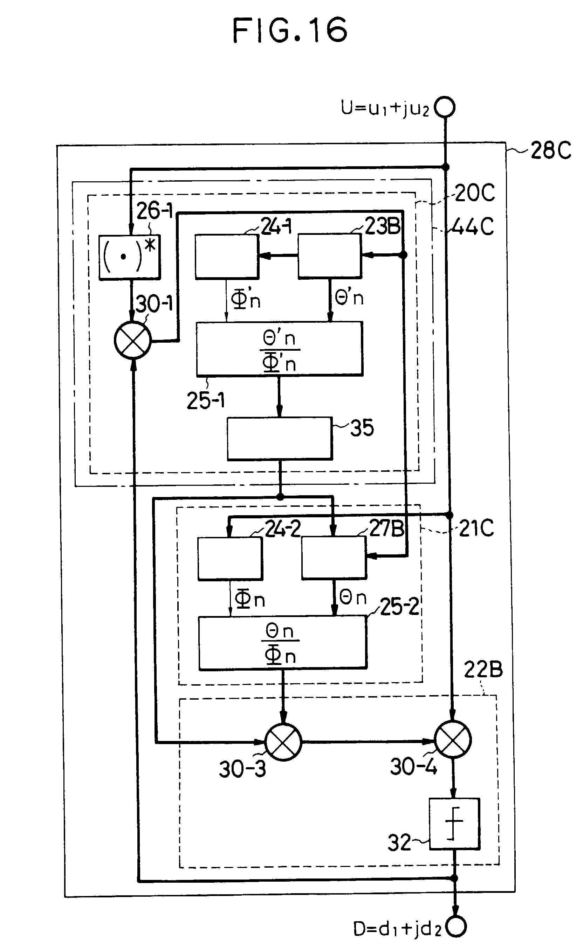

Referring now to Fig. 16, a third embodiment of an apparatus for demodulation with adaptive phase control in quasi-coherent detection according to the present invention will be described in detail. Here, those elements which are substantially equivalent to the corresponding elements in the first embodiment described above will be given the same reference numerals in the figures, and their description will be omitted.

This third embodiment is a modification of the first embodiment described above in which the circuit configuration of the phase control circuit is simplified.

Namely, in this third embodiment, the phase control circuit 28 in the first embodiment is replaced by the phase control circuit 28C shown in Fig. 16 in which the frequency compensation circuit 44C differs from the frequency compensation circuit 44 of the first embodiment by the omission of the involution circuit 29 of the first embodiment.

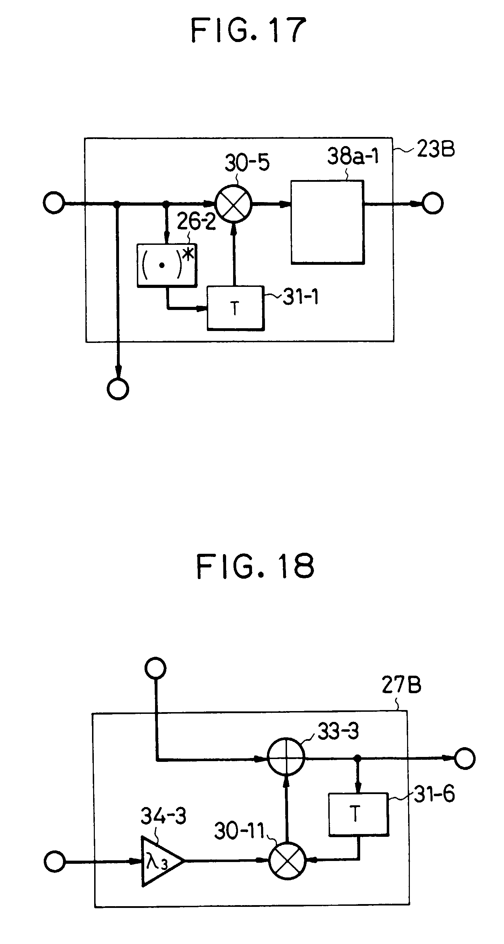

In addition, the correlation value weighted accumulation circuit 23B has a detailed configuration as shown in Fig. 17 which is different from that shown in Fig. 6 used in the first embodiment by the lack of the complex normalization circuit 35. Instead, the complex normalization circuit 35 is provided after the divider 25-1, such that the output of the divider 25-1 is supplied to the complex normalization circuit 35 alone, while the output of the complex normalization circuit 35 is supplied to the phase error estimation circuit 21 as well as to the complex multiplier 30-3 of the phase equalization circuit 22B.

On the other hand, the phase error estimation circuit 21C of this third embodiment differs from the phase error estimation circuit 21 of the first embodiment in that the cross correlation value weighted accumulation circuit 27B has a detailed configuration as shown in Fig. 18 which is different from that shown in Fig. 12 used in the first embodiment as follows.

Namely, in this configuration of Fig. 18, the cross correlation value weighted accumulation circuit 27B comprises: a weight circuit 34-3 for weighting the correlation value outputted from the frequency compensation circuit 44C with the forgetting factor λ₃, which is similar to the weight circuit 34-1 used in the first embodiment, where λ₃ may or may not be equal to λ₁ or λ₂ used in the frequency compensation circuit 44C; a delay circuit 31-6 for delaying an output of this cross correlation value weighted accumulation circuit 27B for one symbol period; a complex multiplier 30-11 for multiplying the weighted correlation value outputted from the weight circuit 34-3 and the delayed output of the delay circuit 31-6; and an adder 33-3 for adding the correlation value outputted from the complex multiplier 30-1 and the output of the complex multiplier 30-11.

Also, the phase equalization circuit 22B of this third embodiment differs from the phase equalization circuit 22 of the first embodiment in that the complex multiplier 30-2 is omitted, and the complex multiplier 30-3 multiplies the output of the frequency compensation circuit 44C and the phase error estimation circuit 21C.

With this configuration of Fig. 16, the frequency error estimation according to the variation during one symbol in the cross correlation value of the tentatively demodulated signals U and the demodulated complex signals D is obtained by the frequency compensation circuit 44C, just as in the first embodiment. Then, the obtained frequency error estimation is weighted by the forgetting factor λ₃ for the sake of the phase error estimation, and the exponentially weighted accumulation with the weighted frequency error estimation as the exponential weight is carried out at the cross correlation value weighted accumulation circuit 27B, such that the phase error estimation can be obtained at the divider 25-2. Then, by multiplying this phase error estimation with the frequency error estimation outputted from the frequency compensation circuit 44C as a state transition term at the complex multiplier 30-3, it becomes possible to obtain the accurate phase compensation with the frequency error compensation taken into account, just as in the first embodiment.

In this third embodiment, the circuit configuration of the phase control circuit 28C has a significant simplification in the omission of the involution circuit 29, as well as the reduction of the number of complex multiplication required in the phase equalization circuit 22B, so that this phase control circuit 28C can be realized in a smaller circuit size compared with the phase control circuit 28 of the first embodiment.

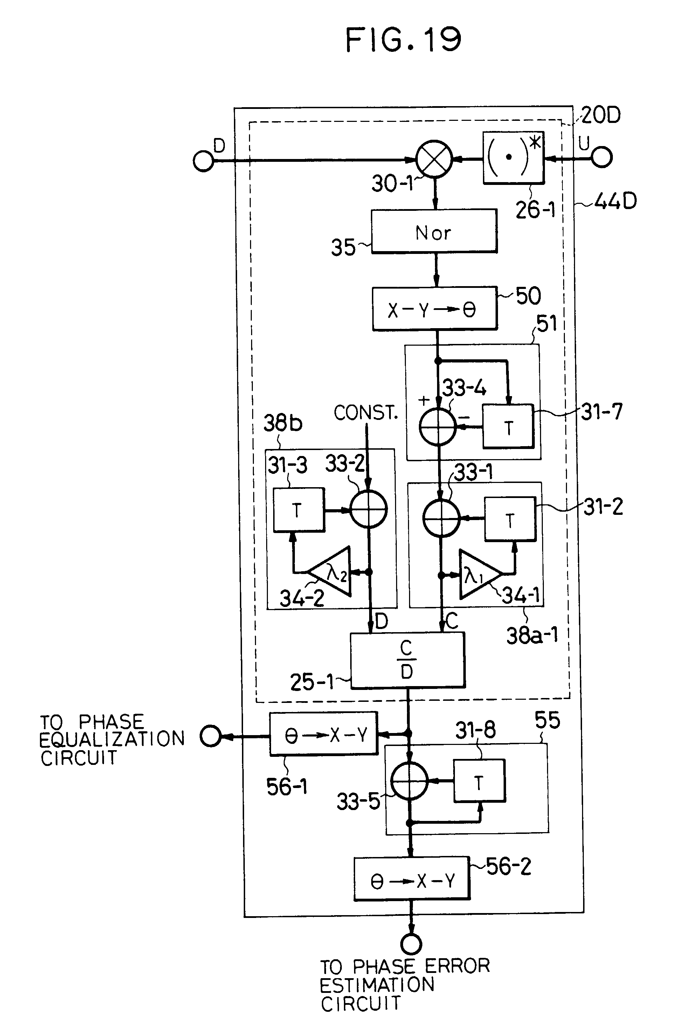

Referring now to Fig. 19, a fourth embodiment of an apparatus for demodulation with adaptive phase control in quasi-coherent detection according to the present invention will be described in detail. Here, those elements which are substantially equivalent to the corresponding elements in the first embodiment described above will be given the same reference numerals in the figures, and their description will be omitted.

This fourth embodiment is a modification of the first embodiment described above in which the circuit configuration of the phase control circuit is simplified by realizing the operation in the frequency compensation circuit in terms of polar coordinates.

Namely, in this fourth embodiment, the frequency compensation circuit 44D in the phase control circuit has a detailed configuration as shown in Fig. 19, which differs from the configuration of the frequency compensation circuit 44 shown in Fig. 5 for the first embodiment as follows.

First, the normalized correlation value obtained by the complex normalization circuit 35 is supplied to a phase angle conversion memory circuit 50, which converts the normalized correlation value given in terms of the Cartesian coordinates into the phase angle given in terms of the polar coordinates according to the memorized correspondences between the Cartesian coordinates and the polar coordinates.

Then, the phase angle obtained by the phase angle conversion memory circuit 50 is supplied to an accumulation circuit 51 for obtaining the phase variation during one symbol, which is formed by a delay circuit 31-7 for delaying the phase angle supplied from the phase angle conversion memory circuit 50 for one symbol period, and an adder 33-4 for adding the phase angle supplied from the phase angle conversion memory unit 50 and the delayed phase angle outputted from the delay circuit 31-7. This accumulation circuit 51 replaces the configuration formed by the complex conjugation circuit 26-2, the delay circuit 31-1, and the complex multiplier 30-5 in the configuration shown in Fig. 6. The output of the adder 33-4 is then supplied to the exponentially weighted accumulation circuit 38a-1 similar to that shown in Fig. 7.

On the other hand, instead of the auto correlation value weighted accumulation circuit 24-1 shown in Fig. 9, the exponentially weighted accumulation circuit 38b shown in Fig. 10 alone is used with a constant value equal to 1 entered as an input for the adder 33-2.

Then, the outputs of the exponentially weighted accumulation circuits 38a-1 and 38b are supplied to the divider 25-1, and the output of the divider 25-1 is outputted to an accumulation circuit 55 as well as to the phase equalization circuit 22 through a coordinate conversion memory circuit 56-1.

The accumulation circuit 55 is formed by a delay circuit 31-8 for delaying the output of the divider 25-1 for one symbol period, and an adder 33-5 for adding the output of the divider 25-1 and the delayed output outputted from the delay circuit 31-8. This accumulation circuit 55 replaces the involution circuit 29 shown in Fig. 11 used in the first embodiment. The output of the adder 33-5 is then outputted to the phase error estimation circuit 21 through another coordinate conversion memory circuit 56-2.

The coordinate conversion memory circuits 56-1 and 56-2 converts the signals given in terms of the polar coordinates into signals given in terms of the Cartesian coordinates according to the memorized correspondences between the Cartesian coordinates and the polar coordinates.

In this fourth embodiment, the operation in the frequency compensation circuit 44D shown in Fig. 19 is realized in terms of polar coordinates, so that the number of complex multiplier circuits used in the frequency compensation circuit can be reduced. Consequently, the size of the apparatus can be reduced considerably, because each complex multiplication circuit will occupy a considerably large area on an LSI chip for implementing the apparatus of the present invention.

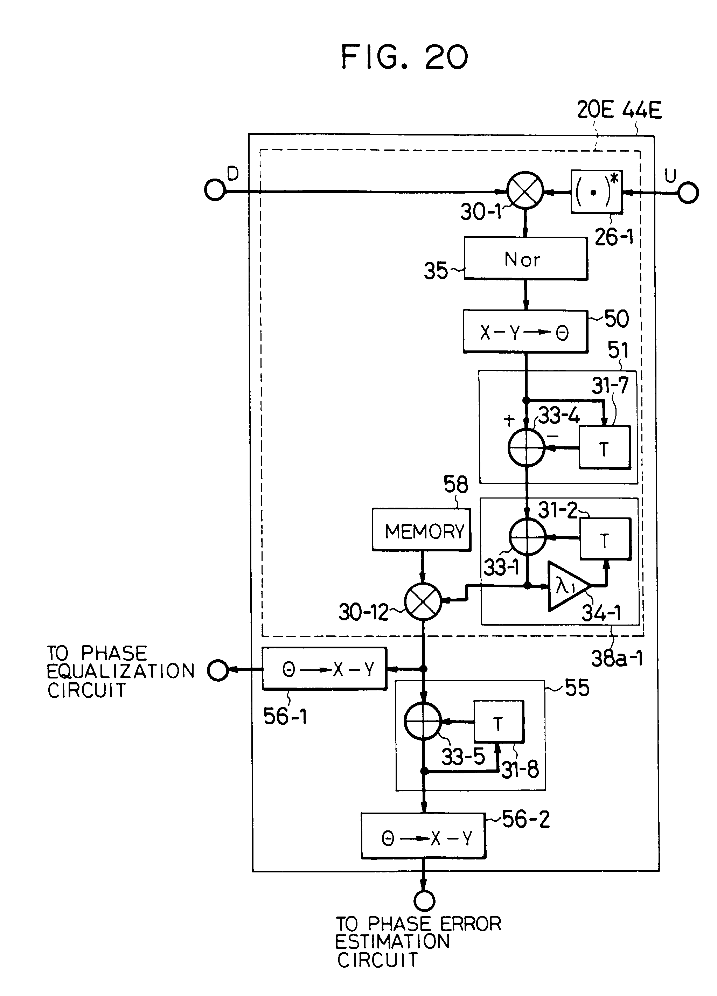

Referring now to Fig. 20, a fifth embodiment of an apparatus for demodulation with adaptive phase control in quasi-coherent detection according to the present invention will be described in detail. Here, those elements which are substantially equivalent to the corresponding elements in the first and fourth embodiments described above will be given the same reference numerals in the figures, and their description will be omitted.

This fifth embodiment is a modification of the first embodiment described above in which the circuit configuration of the phase control circuit is simplified by realizing the operation in the frequency compensation circuit in terms of polar coordinates, just as in the fourth embodiment described above.

In this fifth embodiment, the configuration of the frequency compensation circuit 44D of the fourth embodiment shown in Fig. 19 is further modified into the configuration of the frequency compensation circuit 44E shown in Fig. 20, in which the exponentially weighted accumulation circuit 38b in Fig. 19 is replaced by a memory circuit 58 for memorizing inverse values of the values to be produced by the exponentially weighted accumulation circuit 38b in the fourth embodiment, and the divider 25-1 in Fig. 19 is replaced by a complex multiplier 30-12 for calculating a complex multiplication of the outputs of the exponentially weighted accumulation circuit 38a-1 and the memory circuit 58.

The rest of the frequency compensation circuit 44E of this fifth embodiment shown in Fig. 20 is substantially the similar to the frequency compensation circuit 44D of the fourth embodiment shown in Fig. 19.

In this fifth embodiment, the configuration of the frequency compensation circuit is further simplified, and consequently, the size of the apparatus can be further reduced, because a divider circuit will occupy an even larger area on an LSI chip for implementing the apparatus of the present invention than the complex multiplier circuit.

As described, according to the present invention, the adaptive phase control is achieved at the phase control circuit by estimating the frequency error according to the variation during one symbol in the cross correlation value of the input of and the output of the phase control circuit, and then estimating the initial phase error according to the frequency error estimation, using a Wiener filter configuration in which the input is weighted by complex weights and a mean square value of a difference between the weighted input and a desired signal is made minimum, where the demodulated complex signals are used as the desired signal in the embodiments described above.

Thus, the method of the present invention significantly differs from the conventionally known methods in that once the correct demodulation signals are obtained, the frequency error can be subsequently estimated accurately by using the recursive estimation algorithm. Consequently, the stationary phase error due to the frequency off-set can be removed completely by carrying out the phase equalization with the phase variation due to the frequency error taken into account, where the frequency error is estimated from the variation in the cross correlation value of the input and the desired signals. As a result, the correct demodulation can be achieved even when the frequency error exists.

Here, by using the estimation algorithm such as RLS algorithm which has a fast initial convergence characteristic for the estimation of the frequency error, it becomes possible to achieve the high speed acquisition even when the frequency error exists. Consequently, the preamble bits to be used in the data transmission can be shortened, such that the utilization efficiency of the frequency bandwidth can be improved.

It is to be noted that the demodulation with adaptive phase control according to the present invention is equally applicable to a demodulation circuit in the TDM (Time Division Multiple) transmission of the burst signals. In particular, the application of the present invention is effective in a case of using a narrower transmission bandwidth at low transmission rate.

It is also to be noted that, besides those already mentioned above, many modifications and variations of the above embodiments may be made without departing from the novel and advantageous features of the present invention. Accordingly, all such modifications and variations are intended to be included within the scope of the appended claims.

## Claims

1. A method of demodulation with adaptive phase control, for obtaining demodulated complex signals from modulated complex input signals, characterized by comprising the steps of:
estimating a frequency error in the modulated complex input signals by using a phase variation during one symbol due to the frequency error according to the modulated complex input signals and the demodulated complex signals for present and immediately previous symbols;
estimating an initial phase error in the modulated complex input signals, according to said modulated complex input signals, said demodulated complex signals and the estimated frequency error; and
applying optimum phase compensation based on the estimated frequency error and the estimated initial phase error to said modulated complex input signals in order to obtain said demodulated complex signals.

2. The method of claim 1, wherein the frequency error is estimated by using the phase variation during one symbol due to the frequency error obtained as a complex multiplication of cross correlation values for present and immediately previous symbols, each cross correlation value being obtained as a complex multiplication of the modulated complex input signals and the demodulated complex signals.

3. The method of claim 2, wherein the frequency error is estimated by using an ensemble average of the phase variation during one symbol obtained by dividing an exponentially weighted accumulation of the phase variation during one symbol by an exponentially weighted accumulation of an auto correlation value of a complex multiplication of the modulated complex input signals and the demodulated complex signals.

4. The method of claim 1, wherein the frequency error is estimated by using the phase variation during one symbol due to the frequency error obtained as an exponentially weighted accumulation of a difference between a cross correlation value obtained as a complex multiplication of the modulated complex input signals and the demodulated complex signals for an immediately previous symbol and a complex multiplication of the cross correlation value for a present symbol and the exponentially weighted accumulation for the immediately previous symbol.

5. The method of claim 1, wherein the step of estimating the frequency error further comprises the steps of:
estimating the phase variation during one symbol due to the frequency error by using the modulated complex input signals and the demodulated complex signals for present and immediately previous symbols; and
estimating a phase compensation required by the frequency error by calculating an involution of the estimated phase variation.

6. The method of claim 5, wherein the initial phase error is estimated by using a complex multiplication of the calculated involution and a cross correlation value obtained as a complex multiplication of the modulated complex input signals and the demodulated complex signals.

7. The method of claim 6, wherein the initial phase error is estimated as an ensemble average of the initial phase error by dividing an exponentially weighted accumulation of the complex multiplication of the calculated involution and the cross correlation value obtained as a complex multiplication of the modulated complex input signals and the demodulated complex signals, by an exponentially weighted accumulation of an auto correlation value of the modulated complex input signals.

8. The method of claim 5, wherein the initial phase error is estimated by using an exponentially weighted accumulation of a difference between the demodulated complex signals and a complex multiplication of the exponentially weighted accumulation for an immediately previous symbol and a signal obtained as a complex multiplication of the calculated involution and the modulated complex input signals.

9. The method of claim 5, wherein the optimum phase compensation is applied by calculating a first complex multiplication of the calculated involution and the estimated phase variation, a second complex multiplication of the estimated initial phase error and the first complex multiplication, and a third complex multiplication of the modulated complex input signals and the second complex multiplication.

10. The method of claim 1, wherein the frequency error and the initial phase error are estimated by using RLS (Recursive Least Square) algorithm.

11. The method of claim 1, wherein the frequency error and the initial phase error are estimated by using LMS (Least Mean Square) algorithm.

12. The method of claim 1, wherein the initial phase error is estimated by using a complex addition of a cross correlation value obtained as a complex multiplication of the modulated complex input signals and the demodulated complex signals with a complex multiplication of the estimated frequency error for a present symbol weighted by a forgetting factor and the complex addition for an immediately previous symbol.

13. The method of claim 12, wherein the initial phase error is estimated as an ensemble average of the initial phase error by dividing the complex addition by an exponentially weighted accumulation of an auto correlation value of the modulated complex input signals.

14. The method of claim 12, wherein the optimum phase compensation is applied by calculating a first complex multiplication of the estimated frequency error and the estimated initial phase error and a second complex multiplication of the modulated complex input signals and the first complex multiplication.

15. The method of claim 1, wherein the frequency error is estimated in terms of polar coordinates and the estimated frequency error is outputted in terms of Cartesian coordinates.

16. The method of claim 15, wherein the frequency error is estimated by using the phase variation during one symbol due to the frequency error obtained as a complex addition of cross correlation values given in the polar coordinates for present and immediately previous symbols, each cross correlation value being obtained as a complex multiplication of the modulated complex input signals and the demodulated complex signals.

17. The method of claim 16, wherein the frequency error is estimated by using an ensemble average of the phase variation during one symbol by dividing an exponentially weighted accumulation of the phase variation during one symbol by an exponentially weighted accumulation of a constant value.

18. The method of claim 16, wherein the frequency error is estimated by using an ensemble average of the phase variation during one symbol by multiplying an exponentially weighted accumulation of the phase variation during one symbol by a predetermined inverse of an exponentially weighted accumulation of a constant value.

19. The method of claim 15, wherein the step of estimating the frequency error further comprises the steps of:
estimating the phase variation during one symbol due to the frequency error in terms of the polar coordinates by using the modulated complex input signals and the demodulated complex signals for present and immediately previous symbols; and
estimating a phase compensation required by the frequency error by calculating a complex addition of the phase variation estimated in terms of the polar coordinates for present and immediately previous symbols.

20. The method of claim 1, further comprising the steps of:
initially estimating the frequency error in the modulated complex input signals by using a phase variation during one symbol due to the frequency error according to the modulated complex input signals and predetermined training signals for present and immediately previous symbols, before estimating the frequency error by using a phase variation during one symbol due to the frequency error according to the modulated complex input signals and the demodulated complex signals for present and immediately previous symbols;
initially estimating the initial phase error in the modulated complex input signals, according to said modulated complex input signals, said predetermined training signals, and the initally estimated frequency error, before estimating the initial phase error according to said modulated complex input signals, said demodulated complex signals and the estimated frequency error; and
initially applying optimum phase compensation based on the initially estimated frequency error and the initially estimated initial phase error to said modulated complex input signals in order to obtain said demodulated complex signals, before applying optimum phase compensation based on the estimated frequency error and the estimated initial phase error to said modulated complex input signals in order to obtain said demodulated complex signals.

21. An apparatus for demodulation with adaptive phase control, for obtaining demodulated complex signals from modulated complex input signals, characterized by
means (44) for estimating a frequency error in the modulated complex input signals by using a phase variation during one symbol due to the frequency error according to the modulated complex input signals and the demodulated complex signals for present and immediately previous symbols;
means (21) for estimating an initial phase error in the modulated complex input signals, according to said modulated complex input signals, said demodulated complex signals, and the estimated frequency error; and
means (22) for applying optimum phase compensation based on the estimated frequency error and the estimated initial phase error to said modulated complex input signals in order to obtain said demodulated complex signals.

22. The apparatus of claim 21, wherein said frequency error estimating means (44) estimates the frequency error by using the phase variation during one symbol due to the frequency error obtained as a complex multiplication of cross correlation values for present and immediately previous symbols, each cross correlation value being obtained as a complex multiplication of the modulated complex input signals and the demodulated complex signals.

23. The apparatus of claim 22, wherein said frequency error estimating means (44) estimates the frequency error by using an ensemble average of the phase variation during one symbol by dividing an exponentially weighted accumulation of the phase variation during one symbol by an exponentially weighted accumulation of an auto correlation value of a complex multiplication of the modulated complex input signals and the demodulated complex signals.

24. The apparatus of claim 21, wherein said frequency error estimating means (44) estimates the frequency error by using the phase variation during one symbol due to the frequency error obtained as an exponentially weighted accumulation of a difference between a cross correlation value obtained as a complex multiplication of the modulated complex input signals and the demodulated complex signals for an immediately previous symbol and a complex multiplication of the cross correlation value for a present symbol and the exponentially weighted accumulation for the immediately previous symbol.

25. The apparatus of claim 21, wherein said frequency error estimating means (44) further comprises:
means (20) for estimating the phase variation during one symbol due to the frequency error by using the modulated complex input signals and the demodulated complex signals for present and immediately previous symbols; and
means (29) for estimating a phase compensation required by the frequency error by calculating an involution of the estimated phase variation.

26. The apparatus of claim 25, wherein said initial phase error estimating means (21) estimates the initial phase error by using a complex multiplication of the calculated involution and a cross correlation value obtained as a complex multiplication of the modulated complex input signals and the demodulated complex signals.

27. The apparatus of claim 26, wherein said initial phase error estimating means (21) estimates the initial phase error as an ensemble average of the initial phase error by dividing an exponentially weighted accumulation of the complex multiplication of the calculated involution and the cross correlation value obtained as a complex multiplication of the modulated complex input signals and the demodulated complex signals, by an exponentially weighted accumulation of an auto correlation value of the modulated complex input signals.

28. The apparatus of claim 25, wherein said initial phase error estimating means (21) estimates the initial phase error by using an exponentially weighted accumulation of a difference between the demodulated complex signals and a complex multiplication of the exponentially weighted accumulation for an immediately previous symbol and a signal obtained as a complex multiplication of the calculated involution and the modulated complex input signals.

29. The apparatus of claim 25, wherein said optimum phase compensation applying means (22) applies the optimum phase compensation by calculating a first complex multiplication of the calculated involution and the estimated phase variation, a second complex multiplication of the estimated initial phase error and the first complex multiplication, and a third complex multiplication of the modulated complex input signals and the second complex multiplication.

30. The apparatus of claim 21, wherein said frequency error estimating means (44) and said initial phase error estimating means (21) respectively estimate the frequency error and the initial phase error by using RLS (Recursive Least Square) algorithm.

31. The apparatus of claim 21, wherein said frequency error estimating means (44) and said initial phase error estimating means (21) respectively estimate the frequency error and the initial phase error by using LMS (Least Mean Square) algorithm.

32. The apparatus of claim 21, wherein said initial phase error estimating means (21) estimates the initial phase error by using a complex addition of a cross correlation value obtained as a complex multiplication of the modulated complex input signals and the demodulated complex signals with a complex multiplication of the estimated frequency error for a present symbol weighted by a forgetting factor and the complex addition for an immediately previous symbol.

33. The apparatus of claim 32, wherein said initial phase error estimating means (21) estimates the initial phase error as an ensemble average of the initial phase error by dividing the complex addition by an exponentially weighted accumulation of an auto correlation value of the modulated complex input signals.

34. The apparatus of claim 32, wherein said optimum phase compensation applying means (22) applies the optimum phase compensation by calculating a first complex multiplication of the estimated frequency error and the estimated initial phase error, and a second complex multiplication of the modulated complex input signals and the first complex multiplication.

35. The apparatus of claim 21, wherein said frequency error estimating means (44) estimates the frequency error in terms of polar coordinates and outputs the estimated frequency error in terms of Cartesian coordinates.

36. The apparatus of claim 35, wherein said frequency error estimating means (44) estimates the frequency error by using the phase variation during one symbol due to the frequency error obtained as a complex addition of cross correlation values given in the polar coordinates for present and immediately previous symbols, each cross correlation value being obtained as a complex multiplication of the modulated complex input signals and the demodulated complex signals.

37. The apparatus of claim 36, wherein said frequency error estimating means (44) estimates the frequency error by using an ensemble average of the phase variation during one symbol by dividing an exponentially weighted accumulation of the phase variation during one symbol by an exponentially weighted accumulation of a constant value.

38. The apparatus of claim 36, wherein said frequency error estimating means (44) estimates the frequency error by using an ensemble average of the phase variation during one symbol by multiplying an exponentially weighted accumulation of the phase variation during one symbol by a predetermined inverse of an exponentially weighted accumulation of a constant value.

39. The apparatus of claim 35, wherein said frequency error estimating means (44D, 44E) further comprises:
means (20D, 20E) for estimating the phase variation during one symbol due to the frequency error in terms of the polar coordinates by using the modulated complex input signals and the demodulated complex signals for present and immediately previous symbols; and
means (55) for estimating a phase compensation required by the frequency error by calculating a complex addition of the phase variation estimated in terms of the polar coordinates for present and immediately previous symbols.

40. The apparatus of claim 21, wherein:
said frequency error estimating means (44) initially estimates the frequency error in the modulated complex input signals by using a phase variation during one symbol due to the frequency error according to the modulated complex input signals and predetermined training signals for present and immediately previous symbols;
said initial phase error estimating means (21) initially estimates the initial phase error in the modulated complex input signals, according to said modulated complex input signals, said predetermined training signals, and the initially estimated frequency error; and
said optimum phase compensation applying means (22) initially applies optimum phase compensation based on the initially estimated frequency error and the initially estimated initial phase error to said modulated complex input signals in order to obtain said demodulated complex signals.

## Patentansprüche

1. Verfahren zur Demodulation mit adaptiver Phasensteuerung, zur Erhaltung demodulierter komplexer Signale aus modulierten komplexen Eingangssignalen, **dadurch gekennzeichnet, dass** es die Schritte umfasst:
Abschätzen eines Frequenzfehlers in den modulierten komplexen Eingangssignalen, durch Verwenden einer Phasenvariation während eines Symbols aufgrund des Frequenzfehlers gemäß den modulierten komplexen Eingangssignalen und den demodulierten komplexen Signalen für gegenwärtige und unmittelbar vorangegangene Symbole;
Abschätzen eines anfänglichen Phasenfehlers in den modulierten komplexen Eingangssignalen, gemäß den modulierten komplexen Eingangssignalen, den demodulierten komplexen Signalen und dem abgeschätzten Frequenzfehler; und
Anwenden einer Optimalphasenkompensation auf der Grundlage des abgeschätzten Frequenzfehlers und des abgeschätzten anfänglichen Phasenfehlers, auf die modulierten komplexen Eingangssignale, um die demodulierten komplexen Signale zu erhalten.

2. Verfahren nach Anspruch 1, wobei der Frequenzfehler abgeschätzt wird unter Verwendung der Phasenvariation während eines Symbols aufgrund des Frequenzfehlers, erhalten als eine komplexe Multiplikation von Kreuzkorrelationswerten für gegenwärtige und unmittelbar vorangegangene Symbole, wobei jeder Kreuzkorrelationswert erhalten wird als eine komplexe Multiplikation der modulierten komplexen Eingangssignale und der demodulierten komplexen Signale.

3. Verfahren nach Anspruch 2, wobei der Frequenzfehler abgeschätzt wird durch Verwenden eines Ensemble-Mittelwertes der Phasenvariation während eines Symbols, erhalten durch Teilen einer exponentiell gewichteten Akkumulation der Phasenvariation während eines Symbols durch eine exponentiell gerichtete Akkumulation eines Autokorrelationswertes einer komplexen Multiplikation der modulierten komplexen Eingangssignale und der demodulierten komplexen Signale.

4. Verfahren nach Anspruch 1, wobei der Frequenzfehler abgeschätzt wird durch Verwenden der Phasenvariation während eines Symbols aufgrund des Frequenzfehlers, erhalten als eine exponentiell gewichtete Akkumulation einer Differenz zwischen einem Kreuzkorrelationswert, erhalten als eine komplexe Multiplikation der modulierten komplexen Eingangssignale und der demodulierten komplexen Signale für ein unmittelbar vorangegangenes Symbol und einer komplexen Multiplikation des Kreuzkorrelationswertes für ein gegenwärtiges Symbol und der exponentiell gewichteten Akkumulation für das unmittelbar vorangegangene Symbol.

5. Verfahren nach Anspruch 1, wobei der Schritt des Abschätzens des Frequenzfehlers ferner die Schritte umfasst:
Abschätzen der Phasenvariation während eines Symbols aufgrund des Frequenzfehlers, durch Verwenden der modulierten komplexen Eingangssignale und der demodulierten komplexen Signale für gegenwärtige und unmittelbar vorangegangene Symbole; und
Abschätzen einer Phasenkompensation, welche für den Frequenzfehler erforderlich wird, durch Berechnen einer Involution der abgeschätzten Phasenvariation.

6. Verfahren nach Anspruch 5, wobei der anfängliche Phasenfehler abgeschätzt wird durch Verwenden einer komplexen Multiplikation der berechneten Involution und eines Kreuzkorrelationswertes, welcher erhalten wird als komplexe Multiplikation der modulierten komplexen Eingangssignale und der demodulierten komplexen Signale.

7. Verfahren nach Anspruch 6, wobei der anfängliche Phasenfehler abgeschätzt wird als ein Ensemble-Mittelwert des anfänglichen Phasenfehlers durch Teilen einer exponentiell gewichteten Akkumulation der komplexen Multiplikation der berechneten Involution und des Kreuzkorrelationswertes, welcher erhalten wird als komplexe Multiplikation der modulierten komplexen Eingangssignale und der demodulierten komplexen Signale, durch eine exponentiell gewichtete Akkumulation eines Autokorrelationswertes der modulierten komplexen Eingangssignale.

8. Verfahren nach Anspruch 5, wobei der anfängliche Phasenfehler abgeschätzt wird durch Verwenden einer exponentiell gewichteten Akkumulation einer Differenz zwischen den demodulierten komplexen Signalen und einer komplexen Multiplikation der exponentiell gewichteten Akkumulation für ein unmittelbar vorangegangenes Symbol und eines Signals, welches als komplexe Multiplikation der berechneten Involution und der modulierten komplexen Eingangssignale erhalten wird.

9. Verfahren nach Anspruch 5, wobei die Optimalphasenkompensation angewendet wird durch Berechnen einer ersten komplexen Multiplikation der berechneten Involution und der abgeschätzten Phasenvariation, einer zweiten komplexen Multiplikation des abgeschätzten anfänglichen Phasenfehlers und der ersten komplexen Multiplikation, und einer dritten komplexen Multiplikation der modulierten komplexen Eingangssignale und der zweiten komplexen Multiplikation.

10. Verfahren nach Anspruch 1, wobei der Frequenzfehler und der anfängliche Phasenfehler abgeschätzt werden unter Verwendung eines RLS (Recursive Least Square)-Algorithmus.

11. Verfahren nach Anspruch 1, wobei der Frequenzfehler und der anfängliche Phasenfehler abgeschätzt werden unter Verwendung eines LMS (Least Mean Square)-Algorithmus.

12. Verfahren nach Anspruch 1, wobei der anfängliche Phasenfehler abgeschätzt wird durch Verwenden einer komplexen Addition eines Kreuzkorrelationswertes, welcher erhalten wird als eine komplexe Multiplikation der modulierten komplexen Eingangssignale und der demodulierten komplexen Signale, mit einer komplexen Multiplikation des abgeschätzten Frequenzfehlers für ein gegenwärtiges Symbol gewichtet durch einen Vergissfaktor und der komplexen Addition für ein unmittelbar vorangegangenes Symbol.

13. Verfahren nach Anspruch 12, wobei der anfängliche Phasenfehler abgeschätzt wird als ein Ensemble-Mittelwert des anfänglichen Phasenfehlers durch Teilen der komplexen Addition durch eine exponentiell gewichtete Akkumulation eines Autokorrelationswertes der modulierten komplexen Eingangssignale.

14. Verfahren nach Anspruch 12, wobei die optimale Phasenkompensation angewendet wird durch Berechnen einer ersten komplexen Multiplikation des abgeschätzten Frequenzfehlers und des abgeschätzten anfänglichen Phasenfehlers und einer zweiten komplexen Multiplikation der modulierten komplexen Eingangssignale und der ersten komplexen Multiplikation.

15. Verfahren nach Anspruch 1, wobei der Frequenzfehler abgeschätzt wird anhand von Polarkoordinaten und der abgeschätzte Frequenzfehler ausgegeben wird anhand von kartesischen Koordinaten.

16. Verfahren nach Anspruch 15, wobei der Frequenzfehler abgeschätzt wird durch Verwenden der Phasenvariation während eines Symbols aufgrund des Frequenzfehlers, erhalten als eine komplexe Addition von Kreuzkorrelationswerten gegeben in Polarkoordinaten für gegenwärtige und unmittelbar vorangegangene Symbole, wobei jeder Kreuzkorrelationswert erhalten wird als eine komplexe Multiplikation der modulierten komplexen Eingangssignale und der demodulierten komplexen Signale.

17. Verfahren nach Anspruch 16, wobei der Frequenzfehler abgeschätzt wird durch Verwenden eines Ensemble-Mittelwertes der Phasenvariation während eines Symbols durch Teilen einer exponentiell gerichteten Akkumulation der Phasenvariation während eines Symbols durch eine exponentiell gewichtete Akkumulation eines konstanten Wertes.

18. Verfahren nach Anspruch 16, wobei der Frequenzfehler abgeschätzt wird durch Verwenden eines Ensemble-Mittelwertes der Phasenvariation während eines Symbols, durch Multiplizieren einer exponentiell gewichteten Akkumulation der Phasenvariation während eines Symbols durch eine vorbestimmte Inverse einer exponentiell gewichteten Akkumulation eines konstanten Wertes.

19. Verfahren nach Anspruch 15, wobei der Schritt des Abschätzens des Frequenzfehlers weiterhin die Schritte umfasst:
Abschätzen der Phasenvariation während eines Symbols aufgrund des Frequenzfehlers anhand der Polarkoordinaten durch Verwenden der modulierten komplexen Eingangssignale und der demodulierten komplexen Signale für gegenwärtige und unmittelbar vorangegangene Symbole; und
Abschätzen einer Phasenkompensation, welche für den Frequenzfehler erforderlich ist, durch Berechnen einer komplexen Addition der Phasenvariation, abgeschätzt anhand der Polarkoordinaten für gegenwärtige und unmittelbar vorangegangene Symbole.

20. Verfahren nach Anspruch 1, ferner umfassend die Schritte:
anfängliches Abschätzen des Frequenzfehlers in den modulierten komplexen Eingangssignalen durch Verwenden einer Phasenvariation während eines Symbols aufgrund des Frequenzfehlers gemäß den modulierten komplexen Eingangssignalen und vorbestimmter Trainingssignale für gegenwärtige und unmittelbar vorangegangene Symbole, vor dem Abschätzen des Frequenzfehlers durch Verwenden einer Phasenvariation während eines Symbols aufgrund des Frequenzfehlers gemäß den modulierten komplexen Eingangssignalen und den demodulierten komplexen Signalen für gegenwärtige und unmittelbar vorangegangene Symbole;
anfängliches Abschätzen des anfänglichen Phasenfehlers in den modulierten komplexen Eingangssignalen, gemäß den modulierten komplexen Eingangssignalen, den vorbestimmten Trainingssignalen und des anfänglich abgeschätzten Frequenzfehlers, vor dem Abschätzen des anfänglichen Phasenfehlers gemäß den modulierten komplexen Eingangssignalen, den demodulierten komplexen Signalen und dem abgeschätzten Frequenzfehler; und
anfängliches Anwenden einer Optimalphasenkompensation auf der Grundlage des anfänglich abgeschätzten Frequenzfehlers und des anfänglich abgeschätzten anfänglichen Phasenfehlers, auf die modulierten komplexen Eingangssignale, um die demodulierten komplexen Signale zu erhalten, vor dem Anwenden der Optimalphasenkompensation auf der Grundlage des abgeschätzten Frequenzfehlers und des abgeschätzten anfänglichen Phasenfehlers auf die modulierten komplexen Eingangssignale, um die demodulierten komplexen Signale zu erhalten.

21. Vorrichtung zur Demodulation mit adaptiver Phasensteuerung, zur Erhaltung demodulierter komplexer Signale aus modulierten komplexen Eingangssignalen, gekennzeichnet durch
Mittel (44) zur Abschätzung eines Frequenzfehlers in den modulierten komplexen Eingangssignalen durch Verwenden einer Phasenvariation während eines Symbols aufgrund des Frequenzfehlers gemäß den modulierten komplexen Eingangssignalen und den demodulierten komplexen Signalen für gegenwärtige und unmittelbar vorangegangene Symbole;
Mittel (21) zur Abschätzung eines anfänglichen Phasenfehlers in den modulierten komplexen Eingangssignalen, gemäß den modulierten komplexen Eingangssignalen, den demodulierten komplexen Signalen und dem abgeschätzten Frequenzfehler; und
Mittel (22) zur Anwendung einer Optimalphasenkompensation auf der Grundlage des abgeschätzten Frequenzfehlers und des abgeschätzten anfänglichen Phasenfehlers auf die modulierten komplexen Eingangssignale, um die demodulierten komplexen Signale zu erhalten.

22. Vorrichtung nach Anspruch 21, wobei das Frequenzfehler-Abschätzmittel (44) den Frequenzfehler abschätzt durch Verwenden der Phasenvariation während eines Symbols aufgrund des Frequenzfehlers, erhalten als komplexe Multiplikation von Kreuzkorrelationswerten für gegenwärtige und unmittelbar vorangegangene Symbole, wobei jeder Kreuzkorrelationswert erhalten wird als eine komplexe Multiplikation der modulierten komplexen Eingangssignale und der demodulierten komplexen Signale.

23. Vorrichtung nach Anspruch 22, wobei das Frequenzfehler-Abschätzmittel (44) den Frequenzfehler abschätzt durch Verwenden eines Ensemble-Mittelwertes der Phasenvariation während eines Symbols durch Teilen einer exponentiell gewichteten Akkumulation der Phasenvariation während eines Symbols durch eine exponentiell gewichtete Akkumulation eines Autokorrelationswertes einer komplexen Multiplikation der modulierten komplexen Eingangssignale und der demodulierten komplexen Signale.

24. Vorrichtung nach Anspruch 21, wobei das Frequenzfehler-Abschätzmittel (44) den Frequenzfehler abschätzt durch Verwenden der Phasenvariation während eines Symbols aufgrund des Frequenzfehlers, erhalten als eine exponentiell gewichtete Akkumulation einer Differenz zwischen einem Kreuzkorrelationswert, erhalten als eine komplexe Multiplikation der modulierten komplexen Eingangssignale und der demodulierten komplexen Signale für ein vorangegangenes Symbol, und einer komplexen Multiplikation des Kreuzkorrelationswertes für ein gegenwärtiges Symbol und der exponentiell gewichteten Akkumulation für das unmittelbar vorangegangene Symbol.

25. Vorrichtung nach Anspruch 21, wobei das Frequenzfehler-Abschätzmittel (44) ferner umfasst:
ein Mittel (20) zur Abschätzung der Phasenvariation während eines Symbols aufgrund des Frequenz fehlers durch Verwenden der modulierten komplexen Eingangssignale und der demodulierten komplexen Signale für gegenwärtige und unmittelbar vorangegangene Symbole, und
ein Mittel (29) zur Abschätzung einer Phasenkompensation, welche für den Frequenzfehler erforderlich ist, durch Berechnen einer Involution der abgeschätzten Phasenvariation.

26. Vorrichtung nach Anspruch 25, wobei das Anfangsphasenfehler-Abschätzmittel (21) den anfänglichen Phasenfehler durch Verwenden einer komplexen Multiplikation der berechneten Involution und eines Kreuzkorrelationswertes abschätzt, erhalten als eine komplexe Multiplikation der modulierten komplexen Eingangssignale und der demodulierten komplexen Signale.

27. Vorrichtung nach Anspruch 26, wobei das Anfangsphasenfehler-Abschätzmittel (21) den anfänglichen Phasenfehler abschätzt als Ensemble-Mittelwert des anfänglichen Phasenfehlers durch Teilen einer exponentiell gewichteten Akkumulation der komplexen Multiplikation der berechneten Involution und des Kreuzkorrelationswertes, welcher als komplexe Multiplikation der modulierten komplexen Eingangssignale und der demodulierten komplexen Signale erhalten wird, durch eine exponentiell gewichtete Akkumulation eines Autokorrelationswertes der modulierten komplexen Eingangssignale.

28. Vorrichtung nach Anspruch 25, wobei das Anfangsphasenfehler-Abschätzmittel (21) den anfänglichen Phasenfehler abschätzt durch Verwenden einer exponentiell gewichteten Akkumulation einer Differenz zwischen den demodulierten komplexen Signalen und einer komplexen Multiplikation der exponentiell gewichteten Akkumulation für ein unmittelbar vorangegangenes Symbol und eines Signals, welches erhalten wird als eine komplexe Multiplikation der berechneten Involution und der modulierten komplexen Eingangssignale.

29. Vorrichtung nach Anspruch 25, wobei das Optimalphasenkompensations-Anwendungsmittel (22) die Optimalphasenkompensation anwendet durch Berechnen einer ersten komplexen Multiplikation der berechneten Involution und der abgeschätzten Phasenvariation, einer zweiten komplexen Multiplikation des abgeschätzten anfänglichen Phasenfehlers und der ersten komplexen Multiplikation, und einer dritten komplexen Multiplikation der modulierten komplexen Eingangssignale und der zweiten komplexen Multiplikation.

30. Vorrichtung nach Anspruch 21, wobei das Frequenzfehler-Abschätzmittel (44) und das Anfangsphasenfehler-Abschätzmittel (21) jeweils den Frequenzfehler und den anfänglichen Phasenfehler unter Verwendung eines RLS (Recursive Least Square)-Algorithmus abschätzen.

31. Vorrichtung nach Anspruch 21, wobei das Frequenzfehler-Abschätzmittel (44) und das Anfangsphasenfehler-Abschätzmittel (21) jeweils den Frequenzfehler und den anfänglichen Phasenfehler unter Verwendung eines LMS (Least Mean Square)-Algorithmus abschätzen.

32. Vorrichtung nach Anspruch 21, wobei das Anfangsphasenfehler-Abschätzmittel (21) den anfänglichen Phasenfehler abschätzt durch Verwenden einer komplexen Addition eines Kreuzkorrelationswertes, erhalten als eine komplexe Multiplikation der modulierten komplexen Eingangssignale und der demodulierten komplexen Signale, mit einer komplexen Multiplikation des abgeschätzten Frequenzfehlers für ein gegenwärtiges Symbol gewichtet durch einen Vergissfaktor, und einer komplexen Addition für ein unmittelbar vorangegangenes Symbol.

33. Vorrichtung nach Anspruch 32, wobei das Anfangsphasenfehler-Abschätzmittel (21) den anfänglichen Phasenfehler abschätzt als Ensemble-Mittelwert des anfänglichen Phasenfehlers durch Teilen der komplexen Addition mit einer exponentiell gewichteten Akkumulation eines Autokorrelationswertes der modulierten komplexen Eingangssignale.

34. Vorrichtung nach Anspruch 32, wobei das Optimalphasenkompensations-Anwendungsmittel (22) die Optimalphasenkompensation anwendet durch Berechnen einer ersten komplexen Multiplikation des abgeschätzten Frequenzfehlers und des abgeschätzten anfänglichen Phasenfehlers, und einer zweiten komplexen Multiplikation der modulierten komplexen Eingangssignale und der ersten komplexen Multiplikation.

35. Vorrichtung nach Anspruch 21, wobei das Frequenzfehler-Abschätzmittel (44) den Frequenzfehler anhand von Polarkoordinaten abschätzt und den abgeschätzten Frequenzfehler anhand von kartesischen Koordinaten ausgibt.

36. Vorrichtung nach Anspruch 35, wobei das Frequenzfehler-Abschätzmittel (44) den Frequenzfehler abschätzt durch Verwenden der Phasenvariation während eines Symbols aufgrund des Frequenzfehlers, erhalten als eine komplexe Addition von Kreuzkorrelationswerten gegeben in Polarkoordinaten für gegenwärtige und unmittelbar vorangegangene Symbole, wobei jeder Kreuzkorrelationswert erhalten wird als eine komplexe Multiplikation der modulierten komplexen Eingangssignale und der demodulierten komplexen Signale.

37. Vorrichtung nach Anspruch 36, wobei das Frequenzfehler-Abschätzmittel (44) den Frequenzfehler abschätzt durch Verwenden eines Ensemble-Mittelwertes der Phasenvariation während eines Symbols durch Teilen einer exponentiell gewichteten Akkumulation der Phasenvariation während eines Symbols durch eine exponentiell gewichtete Akkumulation eines konstanten Wertes.

38. Vorrichtung nach Anspruch 36, wobei das Frequenzfehler-Abschätzmittel (44) den Frequenzfehler abschätzt durch Verwenden eines Ensemble-Mittelwertes der Phasenvariation während eines Symbols durch Multiplizieren einer exponentiell gewichteten Akkumulation der Phasenvariation während eines Symbols durch eine vorbestimmte Inverse einer exponentiell gewichteten Akkumulation eines konstanten Wertes.

39. Vorrichtung nach Anspruch 35, wobei das Frequenzfehler-Abschätzmittel (44D, 44E) ferner umfasst:
Mittel (20D, 20E) zur Abschätzung der Phasenvariation während eines Symbols aufgrund des Frequenzfehlers anhand von Polarkoordinaten durch Verwenden der modulierten komplexen Eingangssignale und der demodulierten komplexen Signale für gegenwärtige und unmittelbar vorangegangene Symbole; und
Mittel (55) zum Abschätzen einer Phasenkompensation, welche für den Frequenzfehler erforderlich ist, durch Berechnen einer komplexen Addition der Phasenvariation, abgeschätzt anhand der Polarkoordinaten für gegenwärtige und unmittelbar vorangegangene Symbole.

40. Vorrichtung nach Anspruch 21, wobei:
das Frequenzfehler-Abschätzmittel (44) anfänglich den Frequenzfehler in den modulierten komplexen Eingangssignalen abschätzt durch Verwenden einer Phasenvariation während eines Symbols aufgrund des Frequenzfehlers gemäß den modulierten komplexen Eingangssignalen und vorbestimmter Trainingssignale für gegenwärtige und unmittelbar vorangegangene Symbole;
das Anfangsphasenfehler-Abschätzmittel (21) anfänglich den anfänglichen Phasenfehler in den modulierten komplexen Eingangssignalen abschätzt, gemäß den modulierten komplexen Eingangssignalen, den vorbestimmten Trainingssignalen und dem anfänglich abgeschätzten Frequenzfehler; und
das Optimalphasenkompensations-Anwendungsmittel (22) anfänglich die Optimalphasenkompensation anwendet auf der Grundlage des anfänglich abgeschätzten Frequenzfehlers und des anfänglich abgeschätzten anfänglichen Phasenfehlers, auf die modulierten komplexen Eingangssignale, um die demodulierten komplexen Signale zu erhalten.

## Revendications

1. Procédé de démodulation avec une commande adaptative de phase, pour obtenir des signaux d'entrée complexes démodulés à partir de signaux d'entrée complexes modulés, caractérisé en ce qu'il comprend les étapes consistant à : □
estimer une erreur de fréquence quand les signaux d'entrée complexes modulés en utilisant une variation de phase pendant un symbole due à l'erreur de fréquence en conformité avec les signaux d'entrée complexes modulés et les signaux d'entrée complexes démodulés pour les symboles présent et immédiatement précédent ;
estimer une erreur de phase de signal initiale dans les signaux d'entrée complexes modulés, en conformité avec lesdits signaux d'entrée complexes modulés, lesdits signaux d'entrée complexes démodulés et ladite erreur de fréquence estimée ; et
appliquer une conversion de phase optimale sur la base de l'erreur de fréquence estimée et de l'erreur de phase initiale estimée auxdits signaux d'entrée complexes modulés afin d'obtenir lesdits signaux d'entrée complexes démodulés.

2. Procédé selon la revendication 1, dans lequel l'erreur de fréquence est estimée en utilisant la variation de phase pendant un symbole due à l'erreur de fréquence obtenue comme une multiplication complexe des valeurs de corrélation croisée pour les symboles présent et immédiatement précédent, chaque valeur de corrélation croisée étant obtenue comme une multiplication complexe des signaux d'entrée complexes modulés et des signaux d'entrée complexes démodulés.

3. Procédé selon la revendication 2, dans lequel l'erreur de fréquence est estimée en utilisant une moyenne d'ensemble de la variation de phase pendant un symbole obtenue en divisant une accumulation exponentiellement pondérée de la variation de phase pendant un symbole par une accumulation exponentiellement pondérée d'une valeur d'auto-corrélation d'une multiplication complexe des signaux d'entrée complexes modulés et des signaux d'entrée complexes démodulés.

4. Procédé selon la revendication 1, dans lequel l'erreur de fréquence est estimée en utilisant la variation de phase pendant un symbole due à l'erreur de fréquence obtenue comme une accumulation exponentiellement pondérée d'une différence entre une valeur de corrélation croisée obtenue comme une multiplication complexe des signaux d'entrée complexes modulés et les signaux d'entrée complexes démodulés pour un symbole immédiatement précédent et une multiplication complexe de la valeur de corrélation croisée pour un symbole présent et l'accumulation exponentiellement pondérée pour le symbole immédiatement précédent.

5. Procédé selon la revendication 1, dans lequel étape consistant à estimer à l'erreur de fréquence comprend de plus les étapes consistant à :
estimer les variations de phase pendant un symbole dues à l'erreur de fréquence en utilisant les signaux d'entrée complexes modulés et les signaux d'entrée complexes démodulés pour les symboles présent et immédiatement précédent ; et
estimer une compensation de phase requise par l'erreur de fréquence en calculant une involution de la variation de phase estimée.

6. Procédé selon la revendication 5, dans lequel l'erreur de phase initiale est estimée en utilisant une multiplication complexe de l'involution calculée et une valeur de corrélation croisée obtenue comme une multiplication complexe des signaux d'entrée complexes modulés et des signaux d'entrée complexes démodulés.

7. Procédé selon la revendication 6, dans lequel l'erreur de phase initiale est estimée comme une moyenne d'ensemble de l'erreur de phase initiale en divisant une accumulation exponentiellement pondérée de la multiplication complexe de l'involution calculée et la valeur de corrélation croisée obtenue comme une multiplication complexe des signaux d'entrée complexes modulés et des signaux d'entrée complexes démodulés par une accumulation exponentiellement pondérée d'une valeur d'auto-corrélation des signaux d'entrée complexes modulés .

8. Procédé selon la revendication 5, dans lequel l'erreur de phase initiale est estimée en utilisant une accumulation exponentiellement pondérée d'une différence entre les signaux d'entrée complexes démodulés et une multiplication complexe de l'accumulation exponentiellement pondérée pour un symbole immédiatement précédent et un signal obtenu comme une multiplication complexe de l'involution calculée et des signaux d'entrée complexes modulés.

9. Procédé selon la revendication 5, dans lequel la compensation de phase optimale est appliquée en calculant une première multiplication complexe de l'involution calculée et de la variation de phase estimée, une seconde multiplication complexe de l'erreur de phase initiale estimée et de la première multiplication complexe, et une troisième multiplication complexe des signaux d'entrée complexes modulés et de la seconde multiplication complexe.

10. Procédé selon la revendication 1, dans lequel l'erreur de fréquence et l'erreur de phase initiale sont estimées en utilisant un algorithme RLS (Moindre Carré Récursif).

11. Procédé selon la revendication 1, dans lequel l'erreur de fréquence et l'erreur de phase initiale sont estimées en utilisant un algorithme LMS (Moindre Carré Moyen).

12. Procédé selon la revendication 1, dans lequel l'erreur de phase initiale est estimée en utilisant une addition complexe d'une valeur de corrélation croisée obtenue comme une multiplication complexe des signaux d'entrée complexes modulés et des signaux d'entrée complexes démodulés avec une multiplication complexe de l'erreur de fréquence estimée pour un symbole présent pondéré par un facteur d'oubli et l'addition complexe pour un symbole immédiatement précédent.

13. Procédé selon la revendication 12, dans lequel l'erreur de phase initiale est estimée comme une moyenne d'ensemble de l'erreur de phase initiale en divisant l'addition complexe par une accumulation exponentiellement pondérée d'une valeur d'auto-corrélation des signaux d'entrée complexes modulés .

14. Procédé selon la revendication 12, dans lequel la phase optimale de compensation est appliquée en calculant une première multiplication complexe de l'erreur de fréquence estimée et de l'erreur de phase estimée et une seconde multiplication complexe des signaux d'entrée complexes modulés et de la première multiplication complexe.

15. Procédé selon la revendication 1, dans lequel l'erreur de fréquence est estimée en terme de coordonnées polaires et l'erreur de fréquence estimée est sortie en terme de coordonnées cartésiennes.

16. Procédé selon la revendication 15, dans lequel l'erreur de fréquence est estimée en utilisant la variation de phase pendant un symbole due à l'erreur de fréquence obtenue comme une addition complexe des valeurs de corrélation croisée données dans les coordonnées polaires pour les symboles présent et immédiatement précédent, chaque valeur de corrélation croisée étant obtenue comme une multiplication complexe des signaux d'entrée complexes modulés et des signaux d'entrée complexes démodulés.

17. Procédé selon la revendication 16, dans lequel l'erreur de fréquence est estimée en utilisant une moyenne d'ensemble de la variation de phase pendant un symbole en divisant une accumulation exponentiellement pondérée de la variation de phase pendant un symbole par une accumulation exponentiellement pondérée d'une valeur constante.

18. Procédé selon la revendication 16, dans lequel l'erreur de fréquence est estimée en utilisant une moyenne d'ensemble de la variation de phase pendant un symbole en multipliant une accumulation exponentiellement pondérée de la variation de phase pendant un symbole par un inverse prédéterminé d'une accumulation exponentiellement pondérée d'une valeur constante.

19. Procédé selon la revendication 15, dans lequel l'étape consistant à estimer l'erreur de fréquence comprend de plus les étapes consistant à :
estimer la variation de phase pendant un symbole due à l'erreur de fréquence en termes de coordonnées polaires en utilisant les signaux d'entrée complexes modulés et les signaux d'entrée complexes démodulés pour les symboles présent et les symbole immédiatement précédent ; et
estimer une compensation de phase requise par l'erreur de fréquence en calculant une addition complexe de la variation de phase estimée en terme de coordonnées polaires pour les symboles présent et immédiatement précédent.

20. Procédé selon la revendication 1, comprenant de plus les étapes consistant à :
estimer initialement l'erreur de fréquence dans les signaux d'entrée complexes modulés en utilisant une variation de phase pendant un symbole due à l'erreur de fréquence en conformité avec les signaux d'entrée complexes modulés et les signaux d'apprentissage prédéterminés pour les symboles présent et immédiatement précédent, avant d'estimer l'erreur de fréquence en utilisant une variation de phase pendant un symbole due à l'erreur de fréquence en conformité avec les signaux d'entrée complexes modulés et les signaux d'entrée complexes démodulés pour les symboles présent et immédiatement précédent ;
estimer initialement l'erreur de phase initiale dans les signaux d'entrée complexes modulés, en conformité avec lesdits signaux d'entrée complexes modulés, lesdits signaux d'apprentissage prédéterminés et ladite erreur de fréquence initialement estimée, avant d'estimer l'erreur de phase initiale en conformité avec lesdits signaux d'entrée complexes modulés, lesdits signaux d'entrée complexes démodulés et ladite erreur de fréquence estimée ; et
appliquer initialement une compensation de phase optimale sur la base de l'erreur de fréquence estimée initialement et de l'erreur de phase initiale estimée initialement auxdits signaux d'entrée complexes modulés afin d'obtenir lesdits signaux d'entrée complexes démodulés, avant d'appliquer la compensation de phase optimale sur la base de l'erreur de fréquence estimée et de l'erreur de phase initiale estimée auxdits signaux d'entrée complexes modulés afin d'obtenir lesdits signaux d'entrée complexes démodulés.

21. Dispositif pour démodulation avec une commande adaptative de phase, pour obtenir des signaux d'entrée complexes démodulés à partir de signaux d'entrée complexes modulés, caractérisé par
un moyen (44) pour estimer une erreur de fréquence dans les signaux d'entrée complexes modulés en utilisant une variation de phase pendant un symbole due à l'erreur de fréquence en conformité avec les signaux d'entrée complexes modulés et les signaux d'entrée complexes démodulés pour les symboles présent et immédiatement précédent ;
un moyen (21) pour estimer une erreur de phase initiale dans les signaux d'entrée complexes modulés, en conformité avec lesdits signaux d'entrée complexes modulés, lesdits signaux d'entrée complexes démodulés et l'erreur de fréquence estimée ; et
un moyen (22) pour appliquer une compensation de phase optimale sur la base de l'erreur de fréquence estimée et de l'erreur de phase initiale estimée auxdits signaux d'entrée complexes modulés afin d'obtenir lesdits signaux d'entrée complexes démodulés.

22. Dispositif selon la revendication 21, dans lequel ledit moyen d'estimation d'erreur de fréquence (44) estime l'erreur de fréquence en utilisant la variation de phase pendant un symbole due à l'erreur de fréquence obtenue comme une multiplication complexe des valeurs de corrélation croisée pour les symboles présent et immédiatement précédent, chaque valeur de corrélation croisée étant obtenue comme une multiplication complexe des signaux d'entrée complexes modulés et des signaux d'entrée complexes démodulés.

23. Dispositif selon la revendication 22, dans lequel ledit moyen d'estimation d'erreur de fréquence (44) estime l'erreur de fréquence en utilisant une moyenne d'ensemble de la variation de phase pendant un symbole en divisant une accumulation exponentiellement pondérée de la variation de phase pendant un symbole par une accumulation exponentiellement pondérée d'une valeur d'auto-corrélation d'une multiplication complexe des signaux d'entrée complexes modulés et des signaux d'entrée complexes démodulés.

24. Dispositif selon la revendication 21, dans lequel ledit moyen d'estimation d'erreur de fréquence (44) estime l'erreur de fréquence en utilisant la variation de phase pendant un symbole due à l'erreur de fréquence obtenue comme une accumulation exponentiellement pondérée d'une différence entre une valeur de corrélation croisée obtenue comme une multiplication complexe des signaux d'entrée complexes modulés et des signaux d'entrée complexes démodulés pour un symbole immédiatement précédent et une multiplication complexe de la valeur de corrélation croisée pour un symbole présent et l'accumulation exponentiellement pondérée pour le symbole immédiatement précédent.

25. Dispositif selon la revendication 21, dans lequel ledit moyen d'estimation d'erreur de fréquence (44) comprend de plus :
un moyen (20) pour estimer la variation de phase pendant un symbole due à l'erreur de fréquence en utilisant les signaux d'entrée complexes modulés et les signaux d'entrée complexes démodulés pour les symboles présent et immédiatement précédent ; et
un moyen (29) pour estimer une compensation de phase requise par l'erreur de fréquence en calculant une involution de la variation de phase estimée.

26. Dispositif selon la revendication 25, dans lequel ledit moyen d'estimation d'erreur de phase initiale (21) estime l'erreur de phase initiale en utilisant une multiplication complexe de l'involution calculée et d'une valeur de corrélation croisée obtenue comme une multiplication complexe des signaux d'entrée complexes modulés et des signaux complexes démodulés.

27. Dispositif selon la revendication 26, dans lequel ledit moyen d'estimation d'erreur de phase initiale (21) estime l'erreur de phase initiale comme une moyenne d'ensemble de l'erreur de phase initiale en divisant une accumulation exponentiellement pondérée de la multiplication complexe de l'involution calculée et la valeur de corrélation croisée obtenue comme une multiplication complexe des signaux d'entrée complexes modulés et des signaux d'entrée complexes démodulés, par une accumulation exponentiellement pondérée d'une valeur d'auto-corrélation des signaux d'entrée complexes modulés.

28. Dispositif selon la revendication 25, dans lequel ledit moyen d'estimation d'erreur de phase initiale (21) estime l'erreur de phase initiale en utilisant une accumulation exponentionnellement pondérée d'une différence entre les signaux d'entrée complexes démodulés et une multiplication complexe de l'accumulation exponentiellement pondérée pour un symbole immédiatement précédent et un signal obtenu comme une multiplication complexe de l'involution calculée et des signaux d'entrée complexes modulés.

29. Dispositif selon la revendication 25, dans lequel ledit moyen d'application de compensation de phase optimale (22) applique la compensation de phase optimale en calculant une première multiplication complexe de l'involution calculée et de la variation de phase estimée, une seconde multiplication complexe de l'erreur de phase initiale estimée et de la première multiplication complexe et une troisième multiplication complexe des signaux d'entrée complexes modulé et de la seconde multiplication complexe.

30. Dispositif selon la revendication 21, dans lequel ledit moyen d'estimation d'erreur de fréquence (44) et ledit moyen d'estimation d'erreur de phase initiale (21) estiment respectivement l'erreur de fréquence et l'erreur de phase initiale en utilisant un algorithme RLS (Moindre Carré Récursif).

31. Dispositif selon la revendication 21, dans lequel ledit moyen d'estimation de fréquence (44) et ledit moyen d'estimation d'erreur de phase initiale (21) estiment respectivement l'erreur de fréquence et l'erreur de phase initiale en utilisant un algorithme LMS (Moindre Carré Moyen).

32. Dispositif selon la revendication 21, dans lequel ledit moyen d'estimation d'erreur de phase initiale (21) estime l'erreur de phase initiale en utilisant une addition complexe d'une valeur de corrélation croisée obtenue comme une multiplication complexe des signaux d'entrée complexes modulés et des signaux d'entrée complexes démodulés avec une multiplication complexe de l'erreur de fréquence estimée pour un symbole présent pondéré par un facteur d'oubli et l'addition complexe pour un symbole immédiatement précédent.

33. Dispositif selon la revendication 32, dans lequel ledit moyen d'estimation d'erreur de phase initiale (21) estime l'erreur de phase initiale comme une moyenne d'ensemble de l'erreur de phase initiale en divisant l'addition complexe par une accumulation exponentiellement pondérée d'une valeur d'auto-corrélation des signaux d'entrée complexes modulés ;

34. Dispositif selon la revendication 32, dans lequel ledit moyen d'application de compensation de phase optimale (22) applique la compensation de phase optimale en calculant une première multiplication complexe de l'erreur de fréquence estimée et de l'erreur de phase initiale estimée, et une seconde multiplication complexe des signaux d'entrée complexes modulés et de la première multiplication complexe.

35. Dispositif selon la revendication 21, dans lequel ledit moyen d'estimation d'erreur de fréquence (44) estime l'erreur de fréquence en termes de coordonnées polaires et sort l'erreur de fréquence estimée en termes de coordonnées cartésiennes.

36. Dispositif selon la revendication 35, dans lequel ledit moyen d'estimation d'erreur de fréquence (44) estime l'erreur de fréquence en utilisant la variation de phase pendant un symbole due à l'erreur de fréquence obtenue comme une addition complexe des valeurs de corrélation croisées données dans les coordonnées polaires pour les symboles présent et immédiatement précédent, chaque valeur de corrélation croisée étant obtenue comme une multiplication complexe des signaux d'entrée complexes modulés et des signaux d'entrée complexes démodulés.

37. Dispositif selon la revendication 36, dans lequel ledit moyen d'estimation d'erreur de fréquence (44) estime l'erreur de fréquence en utilisant une moyenne d'ensemble de la variation de phase pendant un symbole en divisant une accumulation exponentiellement pondérée de la variation de phase pendant un symbole par une accumulation exponentiellement pondérée d'une valeur constante.

38. Dispositif selon la revendication 36, dans lequel ledit moyen d'estimation d'erreur de fréquence (44) estime l'erreur de fréquence en utilisant une moyenne d'ensemble de la variation de phase pendant un symbole en multipliant une accumulation exponentiellement pondérée de la variation de phase pendant un symbole par un inverse prédéterminé d'une accumulation exponentiellement pondérée d'une valeur constante.

39. Dispositif selon la revendication 35, dans lequel ledit moyen d'estimation d'erreur de fréquence (44D, 44E) comprend de plus :
un moyen (20D, 20E) pour estimer la variation de phase pendant un symbole due à l'erreur de fréquence en termes de coordonnées polaires en utilisant les signaux d'entrée complexes modulés et les signaux d'entrée complexes démodulés pour les symboles présent immédiatement précédent ; et
un moyen (55) pour estimer une compensation de phase requise par l'erreur de fréquence en calculant une addition complexe de la variation de phase estimée en terme de coordonnées polaires pour les symboles présent et immédiatement précédent.

40. Dispositif selon la revendication 21, dans lequel :
ledit moyen d'estimation d'erreur de fréquence (44) estime initialement l'erreur de fréquence dans les signaux d'entrée complexes modulés en utilisant une variation de phase pendant un symbole due à l'erreur de fréquence en conformité avec les signaux d'entrée complexes modulés et des signaux d'apprentissage prédéterminés pour les symboles présents et immédiatement précédents ;
ledit moyen d'estimation d'erreur de phase initiale (21) estime initialement l'erreur de phase initiale dans les signaux d'entrée complexes modulés, en conformité avec lesdits signaux d'entrée complexes modulés, lesdits signaux d'apprentissage prédéterminés et ladite erreur de fréquence estimée initialement ; et
ledit moyen d'application de compensation de phase optimale (22) applique initialement la compensation de phase optimale sur la base de l'erreur de fréquence initialement estimée et de l'erreur de phase initiale initialement estimée auxdits signaux d'entrée complexes modulés afin d'obtenir lesdits signaux d'entrée complexes démodulés.
